(19) Europäisches Patentamt
European Patent Office
Office européen des brevets

(11) **EP 1 830 281 A1**

(12) **EUROPEAN PATENT APPLICATION**
published in accordance with Art. 158(3) EPC

(43) Date of publication:
**05.09.2007 Bulletin 2007/36**

(51) Int Cl.:
***G06F 17/30*** (2006.01)

(21) Application number: **05793129.7**

(86) International application number:
**PCT/JP2005/018712**

(22) Date of filing: **11.10.2005**

(87) International publication number:
**WO 2006/048998 (11.05.2006 Gazette 2006/19)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.11.2004 JP 2004322924**

(71) Applicant: **Intellectual Property Bank Corp.
Tokyo 105-0001 (JP)**

(72) Inventors:
• **MASUYAMA, Hiroaki
Toyonaka-shi, Osaka 5600054 (JP)**
• **SATO, Haru-Tada
Tokyo1050001 (JP)**

• **ASADA, Makoto
c/o Intellectual Property Bank Corp.
Tokyo 1050001 (JP)**
• **HASUKO, Kazumi,
Intellectual Property Bank Corp.
Tokyo 1050001 (JP)**
• **HOTTA, Hideaki,
Intellectual Property Bank Corp.
Tokyo 1050001 (JP)**

(74) Representative: **Style, Kelda Camilla Karen et al
Page White & Farrer
Bedford House
John Street
London, WC1N 2BF (GB)**

(54) **KEYWORD EXTRACTING DEVICE**

(57) A keyword extraction device for extracting keywords from a document group including a plurality of documents, the device comprising of an index term extraction means for extracting index terms from data of the document group and a high-frequency term extraction means for calculating a weight including evaluation on the level of an appearance frequency of each index term in the document group and extracting high-frequency terms which are the index terms having a great weight. High-frequency term/index term co-occurrence degree calculating means for calculating a co-occurrence degree of each high-frequency term and each index term in the document group on the basis of the presence or absence of the co-occurrence of the corresponding high-frequency term and the corresponding index term in each document. Clustering means for creating clusters by classifying the high-frequency terms on the basis of the calculated co-occurrence degree. Score calculating means for calculating a score of each index term such that a high score is given to the index term among the index terms that co-occurs with the high-frequency term belonging to more clusters and that co-occurs with the high-frequency term in more documents and keyword extraction means for extracting keywords on the basis of the calculated scores.

FIG. 2

**Description**

TECHNICAL FIELD

The present invention relates to technology for automatically extracting keywords representing a main subject of a document group including a plurality of documents by the use of a computer, and more particularly, to a keyword extraction device, a keyword extraction method, and a keyword extraction program.

BACKGROUND ART

Technical documents such as patent documents and other documents are enormously created day by day. In order to retrieve or analyze these documents, technology is known for automatically extracting keywords representing characteristics of the documents.

For instance, "KeyGraph: Extraction of Keywords by Division/Integration of Co-occurrence Graph of Terms" written by Yukio Osawa et al., Journal of the Institute of Electronics, Information and Communication Engineers, Vol. J82-D-I, No.2, Pages 391-400 (February 1999) (Non-Patent Document 1) discloses a method of extracting keywords representing themes of documents. With this method, foremost, terms (HighFreqs) having a high appearance frequency in the documents are extracted. Then, the co-occurrence degree in the documents is calculated based on the co-occurrence status of HighFreqs in the unit of a sentence, and a combination of HighFreqs with a high co-occurrence degree is used as a "base". HighFreqs not having a high co-occurrence degree will belong to separate bases. Further, the co-occurrence degree with terms in each base is calculated based on the co-occurrence status with the terms in the base in the unit of a sentence, and terms (roots) that integrate sentences with the support of such bases are extracted based on the co-occurrence degree with the terms in each base.

[Non-Patent Document 1] "KeyGraph : Extraction of Keywords by Division/Integration of Co-occurrence Graph of terms" written by Yukio Osawa et al., Journal of the Institute of Electronics, Information and Communication Engineers, Vol. J82-D-I, No.2, Pages 391-400 (February 1999)

DISCLOSURE OF THE INVENTION

Nevertheless, the technology described in Non-Patent Document 1 is not for extracting keywords representing characteristics of a document group including a plurality of documents. In particular, it is not possible to apply the technology described in Non-Patent Document 1 to a document group including a plurality of independent documents, because Non-Patent Document 1 is based on the premise that one document is written to lay down a theme of an author's original thinking and a flow is formed toward such a theme.

An object of the invention is to provide a keyword extraction device, a keyword extraction method, and a keyword extraction program capable of automatically extracting keywords representing characteristics of a document group including a plurality of documents.

Another object of the invention is to automatically extract keywords representing characteristics of a document group including a plurality of documents from various points of view and to enable the stereoscopic understanding of the characteristics of the document group.

(1) The keyword extraction device according to an aspect of the invention is a device for extracting keywords from a document group including a plurality of documents and includes the following means. In other words, the keyword extraction device includes:

index term extraction means for extracting index terms from data of the document group;
high-frequency term extraction means for calculating a weight including evaluation on the level of an appearance frequency of each index term in the document group and extracting high-frequency terms which are the index terms having a great weight;
high-frequency term/index term co-occurrence degree calculating means for calculating a co-occurrence degree of each high-frequency term and each index term in the document group on the basis of the presence or absence of the co-occurrence of the corresponding high-frequency term and the corresponding index term in each document;
clustering means for creating clusters by classifying the high-frequency terms on the basis of the calculated co-occurrence degree;

score calculating means for calculating a score of each index term such that a high score is given to the index term among the index terms that co-occurs with the high-frequency term belonging to more clusters and that co-occurs with the high-frequency term in more documents; and

keyword extraction means for extracting the keywords on the basis of the calculated scores.

Thereby, it is possible to automatically extract keywords representing a characteristic of a document group including a plurality of documents. In particular, it is possible to extract keywords accurately representing the characteristic of the document group by classifying the high-frequency terms on the basis of the co-occurrence degree corresponding to the co-occurrence status of the index terms in the document group in each document, creating clusters, and extracting the keywords by valuing index terms that co-occur with the high-frequency terms belonging to more clusters and that co-occur with the high-frequency terms in more documents.

The extraction of the high-frequency terms as referred to herein is conducted by calculating the weight including the evaluation on the level of an appearance frequency of each index term, extracted from data of the document group, in the document group, and extracting a prescribed number of index terms having a great weight. As this kind of weight, $GF(E)$ (described later) showing the level of an appearance frequency itself in the document group or a function value including $GF(E)$ as a variable may be used.

Further, in order to classify the high-frequency terms on the basis of the co-occurrence degree of each high-frequency term and each index term, for instance, a p-dimension vector having a co-occurrence degree with each of the p index terms as a component is created for each high-frequency term. Then, the clustering means is used to analyze clusters on the basis of the degree of similarity (similarity or dissimilarity) the foregoing p-dimension vector of each high-frequency term.

Moreover, as a method of valuing index terms that co-occur with high-frequency terms belonging to more clusters, for instance, the value obtained from a polynomial equation including the product of the co-occurrence degree (index term/base co-occurrence degree (described later)) of each index term and each high-frequency term every clusters (bases described later) can be used as a score of each index term. Further, as a method of valuing index terms that co-occur with high-frequency terms in more documents, for instance, the function value including as a variable the co-occurrence degree $C(w, w')$ (described later) for calculating the sum (index term/base co-occurrence degree $Co(w, g)$ (described later) of the co-occurrence statuses (1 or 0 or a value additionally subject to prescribed weighting) of the index terms and the high-frequency terms every document belonging to a document group or the index term/base co-occurrence degree $Co'(w, g)$ (described later)) can be used as a score of each index term. Like this, $key(w)$ and $Skey(w)$ described later can be used as the scores which value the index terms that co-occur with the high-frequency terms belonging to more clusters and co-occur with the high-frequency terms in more documents.

(2) In the foregoing keyword extraction device, it is desirable that the score of each index term calculated by the score calculating means is such a score that a high score is given to the index term with a low appearance frequency in a document set including documents other than those included in the document group. Thereby, the keywords can be extracted by valuing the index terms that are unique to the document group as an analytical target.

As the appearance frequency in the document set, for instance, $DF(P)$ described later can be used. Specifically, for example, the reciprocal of $DF(P)$ or the reciprocal of $DF(P)$ x the number of documents of the document set, or the logarithm of either of both may be added or multiplied to the scores which are given the index terms that co-occur with the high-frequency terms belonging to more clusters and co-occur with the high-frequency terms in more documents. $Skey(w)$ described later can be used as the scores that are given to the index terms with a low $DF(P)$.

(3) In the foregoing keyword extraction device, it is desirable that the score of each index term calculated by the score calculating means is such a score that a high score is given to the index term with a high appearance frequency in the document group.

Thereby, it is possible to extract the keywords accurately representing the feature of the document group.

As the appearance frequency in the document group, for instance, $GF(E)$ described later can be used. Specifically, $GF(E)$ may be added or multiplied to the scores which are given to the index terms that co-occur with the high-frequency terms belonging to more clusters and co-occur with the high-frequency terms in more documents. $Skey(w)$ described later can be used as the scores that are given to the index terms with a high $GF(E)$.

(4) In the foregoing keyword extraction device, the keyword extraction means may also decide the number of keywords to be extracted on the basis of the appearance frequencies of the index terms, which a high score is given to by the score calculating means, in the document group.

Thereby, it is possible to extract an appropriate number of keywords representing the characteristic of the document group on the basis of the degree of unity in the contents of the document group.

As the appearance frequency in a document group, for instance, DF (E) described later can be used.

(5) In the foregoing keyword extraction device, it is desirable that the keyword extraction means extracts the decided number of keywords on the basis of appearance ratios of terms in the titles of the documents belonging to the document group.

Thereby, it is possible to extract the keywords accurately representing the feature of the document group.

(6) In the foregoing keyword extraction device, it is desirable to further include:

evaluated value calculating means for calculating an evaluated value of each index term in each document group of a document group set including the document group as an analytical target and another document group; and

concentration ratio calculating means for calculating a concentration ratio in distribution of each index term in the document group set, the concentration ratio being obtained by calculating the sum of the evaluated values of the index terms every document group belonging to the document group set, calculating ratios of the evaluated values to the sum every document group, calculating squares of the ratios, and calculating the sum of all the squares of the ratios every document group belonging to the document group set;

wherein the keyword extraction means extracts the keywords by adding the evaluation of the concentration ratios calculated by the concentration ratio calculating means to the scores in the document group as an analytical target calculated by the score calculating means.

Since terms with a high score calculated by the score calculating means and a low concentration ratio calculated by the concentration ratio calculating means are terms that are dispersed throughout the document group set, they can be positioned as terms that broadly capture the technical field to which the document group as an analytical target belongs.

Here, the individual document groups can be obtained by clustering the document group set.

(7) In the foregoing keyword extraction device, it is desirable to further include:

evaluated value calculating means for calculating an evaluated value of each index term in each document group of a document group set including the document group as an analytical target and another document group; and

share calculating means for calculating a share of each index term in the document group as an analytical target, the share being obtained by calculating the sum of the evaluated values of the index terms, which are extracted from each document group belonging to the document group set, in the document group as an analytical target and calculating a ratio of the evaluated value to the sum every index term;

wherein the keyword extraction means extracts the keywords by adding the evaluation of the shares in the document group as an analytical target calculated by the share calculating means to the scores in the document group as an analytical target calculated by the score calculating means.

Since terms with a high score calculated by the score calculating means and a high share calculated by the share calculating means have a higher share in the document group as an analytical target in comparison to the other terms, they can be positioned as terms (main terms) that well represent the document group as an analytical target.

(8) In the foregoing keyword extraction device, it is desirable to further include:

first reciprocal calculating means for calculating a function value of a reciprocal of the appearance frequency of each index term in a document group set including the document group as an analytical target and another document group;

second reciprocal calculating means for calculating a function value of a reciprocal of the appearance frequency of each index term in a large document aggregation including the document group set; and

originality calculating means for calculating the originality of each index term in the document group set on the basis of a function value obtained by subtracting the calculation result of the second reciprocal calculating means from the calculation result of the first reciprocal calculating means;

wherein the keyword extraction means extracts the keywords by adding the evaluation of originality calculated by the originality calculating means to the scores in the document group as an analytical target calculated by the score calculating means.

If the reciprocal of the appearance frequency of a term in the document group set is large, it implies that the term is a rare term in the document group set. Among the rare terms in the document group set, it could be said that the terms having a small value of the reciprocal of the appearance frequency in the large document aggregation including the document group set may be used often in other fields, but have originality when used in the field pertaining to the document group set.

Terms with a high score calculated by the score calculating means and high originality calculated by the originality calculating means can be positioned as terms that represent an original feature in the particular field.

Here, as the function value of the reciprocal of the appearance frequency, for instance, IDF (inverse document frequency) standardized every index term in the document group can be used.

(9) A keyword extraction device according to another aspect of the invention is a device for extracting keywords from a document group including a plurality of documents and includes the following means. In other words, the keyword extraction device includes:

index term extraction means for extracting index terms from data of a document group set including the document group as an analytical target and another document group;

evaluated value calculating means for calculating an evaluated value of each index term in each document group of the document group set,

concentration ratio calculating means for calculating a concentration ratio in distribution of each index term in the document group set, the concentration ratio being obtained by calculating the sum of the evaluated values of the index terms every document group belonging to the document group set, calculating ratios of the evaluated values to the sum every document group, calculating squares of the ratios, and calculating the sum of all the squares of the ratios every document group belonging to the document group set;

share calculating means for calculating a share of each index term in the document group as an analytical target, the share being obtained by calculating the sum of the evaluated values of the index terms, which are extracted from each document group belonging to the document group set, in the document group as an analytical target and calculating a ratio of the evaluated value to the sum every index term; and

keyword extraction means for extracting the keywords on the basis of a combination of the concentration ratios calculated by the concentration ratio calculating means and the shares in the document group as an analytical target calculated by the share calculating means.

Thereby, it is possible to automatically extract the keywords representing the characteristic of a document group including a plurality of documents so as to enable the stereoscopic understanding of the characteristic of a document group. In particular, since terms with a low square sum calculated by the concentration ratio calculating means are terms that are dispersed throughout the plurality of document groups, they can be positioned as terms that broadly capture the technical field to which the document group as an analytical target belongs. Meanwhile, since terms with a high ratio calculated by the share calculating means are terms with a high share in the document group as an analytical target, they can be positioned as terms (main terms) that well represent the document group as an analytical target. As a result of combining the calculation results of such calculating means, it is possible to categorize the keywords from two points of view, and the characteristic of the document group can be comprehended from many viewpoints.

(10) In the foregoing keyword extraction device, it is desirable to further include:

first reciprocal calculating means for calculating a function value of a reciprocal of the appearance frequency of each index term in the document group set;

second reciprocal calculating means for calculating a function value of a reciprocal of the appearance frequency of each index term in a large document aggregation including the document group set; and

originality calculating means for calculating the originality on the basis of a function value obtained by subtracting the calculation result of the second reciprocal calculating means from the calculation result of the first reciprocal calculating means;

wherein the keyword extraction means extracts the keywords on the basis of the combination further including the originality calculated by the originality calculating means.

By combining the originality calculated by the originality calculating means with the concentration ratios and the shares, it is possible to categorize the keywords from three points of views and the characteristic of the document group can be comprehended from many viewpoints.

(11) A keyword extraction device according to another aspect of the invention is a device for extracting keywords from a document group including a plurality of documents and includes the following means. In other words, the keyword extraction device includes:

index term extraction means for extracting index terms from data of a document group set including the document group as an analytical target and another document group; and

two or more means of:

(a) appearance frequency calculating means for calculating a function value of the appearance frequency of each index term in the document group as an analytical target;

(b) concentration ratio calculating means for calculating a concentration ratio in distribution of each index term in the document group set, the concentration ratio being obtained by calculating an evaluated value of each index term in each document group, calculating the sum of the evaluated values of the index terms every document group belonging to the document group set, calculating ratios of the evaluated values to the sum every document group, calculating squares of the ratios, and calculating the sum of all the squares of the ratios every document group belonging to the document group set;

(c) share calculating means for calculating a share of each index term in the document group as an analytical target, the share being obtained by calculating an evaluated value of each index term in each document group, calculating the sum of the evaluated values of the index terms, which are extracted from each document group belonging to the document group set, in the document group as an analytical target and calculating a ratio of the evaluated value to the sum every index term; and

(d) originality calculating means for calculating originality of each index term on the basis of a function value obtained by subtracting a function value of a reciprocal of the appearance frequency of each index term in a large document aggregation including the document group set from a function value of a reciprocal of the appearance frequency of the corresponding index term in the document group set; and

keyword extraction means for categorizing and extracting the keywords on the basis of a combination of two or more of the function values of the appearance frequencies in the document group as an analytical target, the concentration ratios, the shares in the document group as an analytical target, and the originality calculated by the two or more means.

Thereby, it is possible to automatically extract the keywords representing the characteristic of a document group including a plurality of documents so as to enable the stereoscopic understanding of the characteristic of the document group. In particular, since the keywords are categorized and extracted on the basis of the combination of at least two or more of the concentration ratios calculated by the concentration ratio calculating means, the shares calculated by the share calculating means, the originality calculated by the originality calculating means, and the function values of the appearance frequencies calculated by the appearance frequency calculating means, the characteristic of the document group can be comprehended from many viewpoints-

(12) In the foregoing keyword extraction device, it is desirable that the keyword extraction means categorizes and extracts the keywords by:

determining the index terms having the function values of the appearance frequencies in the document group as an analytical target that are greater than a prescribed threshold value as being important terms in the document group as an analytical target;

determining the index terms, among the important terms in the document group as an analytical target, having the concentration ratios that are less than a prescribed threshold value as being technical terms in the document group as an analytical target;

determining the index terms, among the important terms other than the technical terms in the document group as an analytical target, having the shares in the document group as an analytical target that are greater than a prescribed threshold value as being main terms in the document group as an analytical target; and

determining the index terms, among the important terms other than the technical terms and the main terms in the document group as an analytical target, having the originality that is greater than a prescribed threshold value as original terms in the document group as an analytical target.

Thereby, the specific positioning of keywords can be clear and the characteristic of the document group can be comprehended easily.

(13) In the foregoing keyword extraction device, it is desirable that the function values of the reciprocals of the appearance frequencies in the document group set are a result of standardizing inverse document frequencies (IDF) in the document group set with all the index terms in the document group as an analytical target, in the document group set; and the function values of the reciprocals of the appearance frequencies in a large document aggregation including the document group set are a result of standardizing the inverse document frequencies (IDF) in the large document aggregation with all the index terms in the document group as an analytical target, in the large document aggregation.

Thereby, it is possible to accurately evaluate the originality of the index terms appearing in the document group.

(14) According to other aspects of the invention, there are provided a keyword extraction method including the same steps as the method executed by each of the foregoing devices and a keyword extraction program for causing a computer to execute the same processes as the processes to be executed by each of the foregoing devices. This program may be recorded on a recording medium such as an FD, CD-ROM, or DVD, or transmitted via a network.

According to the invention, it is possible to provide a keyword extraction device, a keyword extraction method, and a keyword extraction program capable of automatically extracting keywords representing a characteristics of a document group including a plurality of documents.

BRIEF DESCRIPTION OF THE DRAWINGS

Fig. 1 is a diagram showing a hardware configuration of a keyword extraction device according to a first embodiment of the invention.

Fig. 2 is a diagram explaining details of configurations and functions of the keyword extraction device according to the first embodiment.

Fig. 3 is a flowchart showing an operational routine of a processing device 1 of the keyword extraction device according to the first embodiment.

Fig. 4 is a diagram explaining details of configurations and functions of a keyword extraction device according to a second embodiment of the invention.

Fig. 5 is a flowchart showing an operational routine of a processing device 1 of the keyword extraction device according to the second embodiment.

Fig. 6 is a reference diagram showing an example of entering the keywords extracted by the keyword extraction device according to the invention into a document correlation diagram showing a correlation between documents.

Fig. 7 is a diagram explaining details of configurations and functions of a keyword extraction device according to a third embodiment of the invention.

Fig. 8 is a flowchart showing an operational routine of a processing device 1 of the keyword extraction device according to the third embodiment.

DESCRIPTION OF REFERENCE NUMERALS AND SIGNS

| | |
|---|---|
| 1 | processing device |
| 2 | input device |
| 3 | recording device |
| 4 | output device |
| 20 | index term extracting unit (index term extraction means) |
| 30 | high-frequency term extracting unit (high-frequency term extraction means) |
| 40 | high-frequency term/index term co-occurrence degree calculating unit (high-frequency term/index term co-occurrence degree calculating means) |
| 50 | clustering unit (clustering means) |
| 70 | key(w) calculating unit (score calculating means) |
| 80 | Skey(w) calculating unit (score calculating means) |
| 90 | keyword extracting unit (keyword extraction means) |
| 140 | label extracting unit (keyword extraction means) |

BEST MODE FOR CARRYING OUT THE INVENTION

Embodiments of the invention are now explained in detail with reference to the attached drawings.

<1. Explanation of vocabulary, etc.>

The terms used herein are foremost explained.

Similarity: Similarity or dissimilarity between the targets to be compared. Methods such as representing similarity by subjecting the respective targets to be compared to vector representation and using the function of the product between vector components such as the cosine or Tanimoto correlation (example of similarity) between the vectors, or representing similarity by using the function of the difference between vector components such as the distance (example of dissimilarity) between vectors may be used.

Index terms: terms to be extracted from all or a part of the documents. There is no particular limitation on the method of extracting terms, and, for instance, conventional methods may be used. In addition, in the case of Japanese language documents, commercially-available morphological analysis software may be used to remove particles and conjunctions and extracting only significant words, or a database of dictionaries (thesauruses) of index terms can be retained in advance for using index terms that can be obtained from such database.

High-frequency terms: Prescribed number of terms with a great weight including the evaluation on the level of an appearance frequency among the index terms in a document group as an analytical target. For instance, GF(E) (described later) or a function value including as a variable GF(E) as the weight of the index terms is calculated, and a prescribed number of terms with a great weight is extracted as such high-frequency terms.

In order to simplify the explanation below, the following abbreviations will be used.

E: Analytical target document group. As the document group E, for instance, a document group configuring the individual clusters in the case of clustering a plurality of documents on the basis of similarity is used. When expressing the respective document groups in a document group set S including a plurality of document groups E, they are expressed as $E_u$ (u = 1, 2, ..., n; where n is the number of document groups).

S: Document group set including a plurality of document groups E. For example, this is configured from 300 patent documents similar to a certain patent document or a patent document group.

P: All documents which are a document aggregation (large document aggregation) including the document group E, and including the document group set S. As all documents P, if patent documents are to be analyzed, for instance, roughly 5,000,000 patent gazettes and utility model gazettes published in the past 10 years in Japan is used.

N(E) or N(P): Number of documents included in the document group E or the document set P.

D, $D_k$ or $D_1$ to $D_{N(E)}$: Individual documents included in the document group E.

W: Total number of index terms included in the document group E.

w, $w_i$, $w_j$: Individual index terms included in the document group E (i = 1, ..., w, j = 1, ..., w).

$\Sigma_{\{condition\ H\}}$ : To take the sum within a range that satisfies condition H.

$\Pi_{\{condition\ H\}}$: To take the product within a range that satisfies condition H.

$\beta(w, D)$: Weight of index terms w in the documents D.

$C(w_i, w_j)$ : Co-occurrence degree of index terms in a document group calculated on the basis of the co-occurrence status of index terms in each document. This is obtained by totaling the co-occurrence status (1 or 0) of index terms $w_i$ and

index terms $w_j$ in a single document D for all documents D belonging to the document group E (after being subject to weighting by ($\beta(w_i, D)$ and $\beta(w_j, D)$).

g or $g_h$: "Base" configured from high-frequency terms in which the co-occurrence degree with each of the index terms is similar. Number of bases = b (h = 1, 2, ..., b).

Co(w, g): Index term/base co-occurrence degree. This is obtained by totaling the co-occurrence degree C(w, w') of the index terms w, and the high-frequency terms w' belonging to the base g for all w' (excluding w) belonging to the base g.

$a_k$: Title of documents $D_k$.

s: String concatenation of the title $a_k$ (k = 1, ..., N (E)).

$X_k$: Title appearance ratio. This is the appearance ratio of each title $a_k$ (in relation to the number of documents N(E)) in the title sum s.

$m_k$: Genus of the index terms $w_v$ (title terms) that appeared in each title $a_k$.

$f_k$: Appearance ratio of title terms (to the number of documents N(E)) in the title sum S.

$y_k$: Title term appearance ratio average. This is obtained by dividing the title term appearance ratio $f_k$ by the genus $m_k$ of the index terms $w_v$ (title term) that appeared in each title $a_k$.

$\tau_k$: Title score. This is calculated for each title of each document belonging to the document group E in order to decide the extraction order of labels (described later).

$T_1$, $T_2$, ...: Titles to be extracted in the descending order of the title score $T_k$,

K: Keyword adaptation. This is calculated in order to decide the number of labels (described later) to be extracted, and represents the occupation of keywords in the document group E.

TF(D) or TF(w, D): Appearance frequency of index terms w in the documents D (index term frequency; Term Frequency).

DF(P) or DF(w, P): Document frequency of index terms w in all documents P as the parent population. Document frequency refers to the number of documents that achieved a hit when searching from a plurality of documents based on a certain index term.

DF(E) or DF(w, E): Document frequency of index terms w in the document group E.

DF(w, D): Document frequency of index terms w in the documents D; that is, this will be 1 if the index terms w are included in the documents D, and 0 if not.

IDF(P) or IDF(w, P): Logarithm of "reciprocal of DF(P) x total number of documents N(P) of all documents". For instance, ln(N(P) / DF(P)).

GF(E) or GF(w, E): Appearance frequency (Global Frequency) of index terms w in the document group E.

TF * IDF(P): Product of TF(D) and IDF(P). This is calculated for each index term in the documents.

GF(E) * IDF(P): Product of GF(E) and IDF(P). This is calculated for each index term in the documents.

<2. Configuration of First Embodiment>

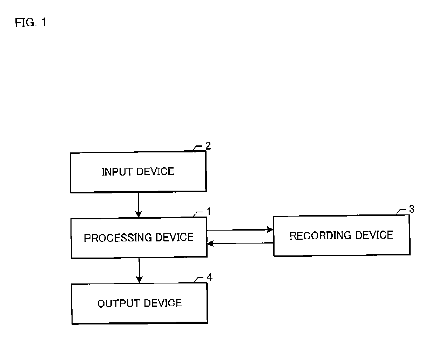

Fig. 1 is a diagram showing the hardware configuration of a keyword extraction device according to the first embodiment of the invention. As shown in Fig. 1, the keyword extraction device of the present embodiment comprises a processing device 1 configured from a CPU (Central Processing Unit), a memory (recording device) and the like, an input device 2 as an input means such as a keyboard (manual input instrument) or the like, a recording device 3 as a recording means for storing documents data or conditions or work of the processing device 1, and an output device 4 as an output means for displaying or printing the extracted keywords.

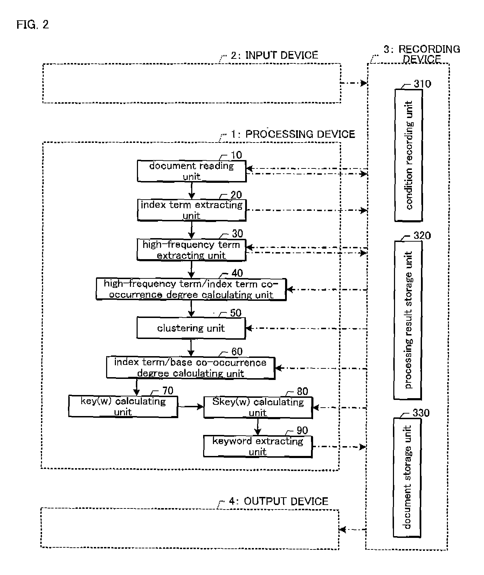

Fig. 2 is a diagram explaining the details of the configuration and function in the keyword extraction device of the first embodiment.

The processing device 1 includes a document reading unit 10, an index term extracting unit 20, a high-frequency term extracting unit 30, a high-frequency term/index term co-occurrence degree calculating unit 40, a clustering unit 50, an index term/base co-occurrence degree calculating unit 60, a key(w) calculating unit 70, an Skey(w) calculating unit 80, and a keyword extracting unit 90.

The recording device 3 is configured from a condition recording unit 310, a processing result storage unit 320, a document storage unit 330 and the like. The document storage unit 330 includes an external database and an internal database. An external database, for instance, refers to document databases such as the IPDL (Industrial Property Digital Library) serviced by the Japanese Patent Office, and PATOLIS serviced by PATOLIS Corporation. In addition, an internal database is a database containing data of commercially-available patent JP-ROM which was stored on one's own account, devices that read data from mediums such as an FD (flexible disk), CD (compact disk) ROM, MO (optical-magnetic disk), and DVD (digital video disk) storing documents, devices such as OCR (optical character reading devices) that read printed paper or handwritten documents, and devices that convert the read data into electronic data such as text.

In Figs. 1 and 2, as the communication means for sending and receiving signals and data between the processing device 1, the input device 2, the recording device 3, and the output device 4, these devices may be directly connected with a USB (universal serial bus) cable, signals and data may be sent and received via a network such as a LAN (local area network), or via a medium such as an FD, CD-ROM, MO, or DVD storing documents. In addition, some or a part of these methods may be combined.

<2-1. Details of Input Device 2>

The configuration and function of the keyword extraction device are now explained in detail with reference to Fig. 2.

The input device 2 accepts the input of document reading conditions, high-frequency term extracting conditions, clustering conditions, tree diagram creating conditions, tree diagram cutting conditions, score calculating conditions, keywords output conditions and so on. The input conditions are sent to and stored in the condition recording unit 310 of the recording device 3.

<2-2. Details of Processing Device 1>

The document reading unit 10 reads, from the document storage unit 330 of the recording device 3, a document group E including a plurality of documents $D_1$ to $D_{N(E)}$ to become an analytical target according to the reading conditions stored in the condition recording unit 310 of the recording device 3. Data of the read document group is sent directly to the index term extracting unit 20 and used for processing, or sent to and stored in the processing result storage unit 320 of the recording device 3.

Incidentally, data sent from the document reading unit 10 to the index term extracting unit 20 or to the processing result storage unit 320 may be all data including the read document data of the document group E. Further, this may also be only the bibliographic data (for instance, filing number or publication number in the case of patent documents) that specifies the respective documents D belonging to the document group E. In the latter case, when required in subsequent processing, data of the respective documents D may be read once again from the document storage unit 330 based on such bibliographic data.

The index term extracting unit 20 extracts index terms of the respective documents from the document group read with the document reading unit 10. Data of index terms of the respective documents is sent directly to the high-frequency term extracting unit 30 and used for processing, or sent to and stored in the processing result storage unit 320 of the recording device 3.

The high-frequency term extracting unit 30 extracts a prescribed number of index terms with great weight including the evaluation on the level of appearance frequency in the document group E according to the high-frequency term extracting conditions stored in the condition recording unit 310 of the recording device 3 and based on the index terms of the respective documents extracted with the index term extracting unit 20.

Specifically, foremost, the GF(E), which is the number of times each index term appeared in the document group E, is calculated. Further, it is preferable to calculate the IDF(P) of each index term, and then the GF(E) * IDF(P) which is the product of IDF(P) and GF(E). Then, a prescribed number of high ranking index terms of the GF(E) or the GF(E) * IDF(P), which is the calculated weight of each index term, is extracted as high-frequency terms.

Data of the extracted high-frequency terms is sent directly to the high-frequency term/index term co-occurrence degree calculating unit 40 and used for processing, or sent to and stored in the processing result storage unit 320 of the recording device 3. Further, it is also preferable that the calculated GF(E) of each index term and the IDF(P) of each index term, which the calculation thereof is preferred, are sent to and stored in the processing result storage unit 320 of the recording device 3.

The high-frequency term/index term co-occurrence degree calculating unit 40 calculates the co-occurrence degree in the document group E based on the co-occurrence status of each high-frequency term extracted with the high-frequency term extracting unit 30, and each index term extracted with the index term extracting unit 20 and stored in the processing result storage unit 320 in each document. Assuming that p index terms were extracted and q high-frequency terms were extracted among them, this will become a matrix data of p rows and q columns.

Data of the co-occurrence degree calculated by the high-frequency term/index term co-occurrence degree calculating unit 40 is sent directly to the clustering unit 50 and used for processing, or sent to and stored in the processing result storage unit 320 of the recording device 3.

The clustering unit 50 analyzes the clusters of the q high-frequency terms according to the clustering conditions stored in the condition recording unit 310 of the recording device 3 based on the co-occurrence degree data calculated by the high-frequency term/index term co-occurrence degree calculating unit 40.

In order to analyze clusters, foremost, the similarity (similarity or dissimilarity) of the co-occurrence degree with each index term for each of the q high-frequency terms is calculated. The calculation of similarity can be executed by calling the similarity calculation module for calculating the similarity from the condition recording unit 310 based on conditions input from the input device 2. Further, the calculation of similarity, for instance, in the example of the co-occurrence degree data of p rows and q columns, may be performed based on the cosine or distance between p dimension column vectors for each high-frequency term to be compared (vector space method). Incidentally, greater the value of the cosine (similarity) between the vectors, this implies that the similarity is greater, and, smaller the value of the distance (dissimilarity) between the vectors, this implies that the similarity is greater. Further, without limitation to the vector space method, similarity can be defined with other methods.

Subsequently, a tree diagram that connects the high-frequency terms in a tree shape is created according to the tree diagram creating conditions stored in the condition recording unit 310 of the recording device 3 based on the calculation result of similarity. As the tree diagram, it is desirable to create a dendrogram reflecting the dissimilarity between the high-frequency terms to the height (connecting distance) of the connecting position.

Subsequently, the created tree diagram is cut according to the tree diagram cutting conditions recorded in the condition recording unit 310 of the recording device 3. As a result of this cutting, the q high-frequency terms is clustered based on the similarity of the co-occurrence degree with each index term. The individual clusters created based on clustering will be referred to as a "base" $g_h$ (h = 1, 2, ..., b).

Data of the base formed with the clustering unit 50 is sent directly to the index term/base co-occurrence degree calculating unit 60 and used for processing, or sent to and stored in the processing result storage unit 320 of the recording device 3.

The index term/base co-occurrence degree calculating unit 60 calculates the co-occurrence degree with each base formed with the clustering unit 50 for each index term extracted with the index term extracting unit 20 and stored in the processing result storage unit 320 of the recording device 3. Data of the co-occurrence degree calculated for each index term is sent directly to the key(w) calculating unit 70 and used for processing, or sent to and stored in the processing result storage unit 320 of the recording device 3.

The key(w) calculating unit 70 calculates the key(w), which is the evaluated score of each index term, based on the co-occurrence degree with the base of each index term calculated by the index term/base co-occurrence degree calculating unit 60. Data of the calculated key(w) is sent directly to the Skey(w) calculating unit 80 and used for processing, or sent to and stored in the processing result storage unit 320 of the recording device 3.

The Skey(w) calculating unit 80 calculates the Skey(w) score based on the key(w) score of each index term calculated by the key(w) calculating unit 70, the GF(E) of each index term calculated by the high-frequency term extracting unit 30 and stored in the processing result storage unit 320 of the recording device 3, and the IDF(P) of each index terms. Data of the calculated Skey(w) is sent directly to the keyword extracting unit 90 and used for processing, or sent to and stored in the processing result storage unit 320 of the recording device 3.

The keyword extracting unit 90 extracts a prescribed number of index terms ranking high in the Skey(w) score of each index term calculated by the Skey(w) calculating unit 80 as keywords of the analytical target document group. Data of the extracted keywords is sent to and stored in the processing result storage unit 320 of the recording device 3, and output to the output device 4 as needed.

<2-3. Details of Recording Device 3>

In the recording device 3 illustrated in Fig. 2, the condition recording unit 310 records information such as the conditions obtained from the input device 2, and sends necessary data based on the request from the processing device 1. The processing result storage unit 320 stores the work of each constituent element in the processing device 1, and sends necessary data based on the request from the processing device 1. The document storage unit 330 stores and provides necessary document data obtained from the external database or the internal database based on the request from the input device 2 or the processing device 1.

<2-4. Details of Output Device 4>

The output device 4 illustrated in Fig. 2 outputs keywords of the document group extracted with the keyword extracting unit 90 of the processing device 1 and stored in the processing result storage unit 320 of the recording device 3. As the mode of output, for instance, considered may be displaying on a display device, printing on a printing medium such as paper, or sending to a computer device on a network via a communication means or the like.

<3. Operation of First Embodiment>

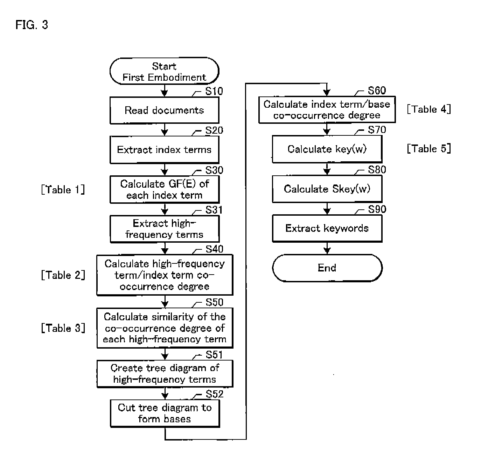

Fig. 3 is a flowchart showing the operational routine of a processing device 1 in the keyword extraction device of the first embodiment.

<3-1. Reading of Documents>

Foremost, the document reading unit 10 reads the document group E consisting from a plurality of documents $D_1$ to $D_{N(E)}$ to become an analytical target from the document storage unit 330 of the recording device 3 (step S10).

<3-2. Extraction of Index terms>

Subsequently, the index term extracting unit 20 extracts index terms of each document from the document group read at the document reading step S10 (step S20). The index term data of each document, for instance, can be represented with a vector having as its component a function value of the appearance frequency (index term frequency TF(D)) of index terms, which are included in the document group E, in each document D.

<3-3. Extraction of High-Frequency terms>

Subsequently, the high-frequency term extracting unit 30 extracts a prescribed number of index terms with great weight including the evaluation on the level of appearance frequency in the document group E based on the index term data of each document extracted at the index term extracting step S20.
Specifically, foremost, the GF(E), which is the number of times each index term appeared in the document group E, is calculated (step S30). In order to calculate the GF(E) of each index term, the index term frequency TF(D) of each index term in each document calculated at the index term extracting step S20 is totaled for the documents $D_1$ to $D_{N(E)}$ belonging to the document group E.

In order to simplify the explanation, a hypothetical case of the TF(D) and the GF(E) in a case where a total of 14 index terms $w_1$ to $w_{14}$ are included in the document group E including 6 documents $D_1$ to $D_6$ is shown in the following table. This hypothetical case will be referred to as needed in the following explanation.

[Table 1]

| TF(D) AND GF (E) OF EACH INDEX TERM | | | | | | | | |
|---|---|---|---|---|---|---|---|---|
| | | DOCUMENTS | | | | | | GF(E) |
| | | $D_1$ | $D_2$ | $D_3$ | $D_4$ | $D_5$ | $D_6$ | |
| INDEX TERMS | $w_1$ | 3 | 3 | 3 | 0 | 0 | 0 | 9 |
| | $w_2$ | 3 | 0 | 3 | 3 | 0 | 0 | 9 |
| | $w_3$ | 3 | 3 | 3 | 3 | 0 | 0 | 12 |
| | $w_4$ | 3 | 3 | 3 | 3 | 3 | 0 | 15 |
| | $w_5$ | 0 | 0 | 3 | 3 | 3 | 3 | 12 |
| | $w_6$ | 0 | 3 | 0 | 3 | 3 | 3 | 12 |
| | $w_7$ | 0 | 0 | 0 | 3 | 3 | 3 | 9 |
| | $w_8$ | 1 | 1 | 1 | 1 | 1 | 1 | 6 |
| | $w_9$ | 1 | 0 | 0 | 0 | 0 | 0 | 1 |
| | $w_{10}$ | 0 | 1 | 0 | 0 | 0 | 0 | 1 |
| | $w_{11}$ | 0 | 0 | 1 | 0 | 0 | 0 | 1 |
| | $w_{12}$ | 0 | 0 | 0 | 1 | 0 | 0 | 1 |
| | $w_{13}$ | 0 | 0 | 0 | 0 | 1 | 0 | 1 |
| | $w_{14}$ | 0 | 0 | 0 | 0 | 0 | 1 | 1 |

Subsequently, a prescribed number of high ranking index terms in the appearance frequency are extracted based on the calculated GF(E) of each index term (step S31). The number of high-frequency terms to be extracted, for instance, shall be 10 terms. Here, for instance, if the 10th term and the 11th term are the same ranking, the 11th term is also extracted as a high-frequency term.
Upon extracting high-frequency terms, it is preferable to further calculate the IDF(P) of each index term and extract a prescribed number of high ranking index terms in the GF(E) * IDF(P). Nevertheless, in the following explanation based on the foregoing hypothetical case, the 7 high ranking terms in the GF(E) are made to be high-frequency terms to simplify the explanation. In other words, index term $w_1$ to index term $w_7$ are extracted as high-frequency terms.

Incidentally, upon extracting high-frequency terms from index terms, it is preferable to remove unnecessary terms from all index terms in advance, and extract high-frequency terms from the remaining index terms. Nevertheless, for instance, in the case of Japanese documents, since there will be variances in the cutout of index terms depending on the sophistication of the morphological analysis software, it is impossible to create a sufficient list of unnecessary terms. Thus, it is desirable to minimize the exclusion of unnecessary terms. As the list of unnecessary terms, for instance, the following examples can be considered in the case of patent documents.

[Words that are insignificant as keywords]

Said, foregoing, aforementioned, following, described, request, paragraph, patent, number, formula, general, above, below, means, characteristics

[Words, unit marks, roman numerals that have low importance as keywords]

Overall, scope, seed, kind, system, for, %, mm, ml, nm, $\mu$m, etc.
Here, although the foregoing unnecessary terms are selected because the generalization capacity is at issue, needless to say, a necessary list may be freely created to match the morphological analysis software to be used or the field of the document group.

<3-4. Calculation of High-Frequency term/Index term Co-occurrence Degree>

Subsequently, the high-frequency term/index term co-occurrence degree calculating unit 40 calculates the co-occurrence degree of each high-frequency term extracted at the high-frequency term extracting step S31, and each index term extracted at the index term extracting step S20 (step S40).
The co-occurrence degree $C(w_i, w_j)$ of the index terms $w_i$ and the index terms $w_j$ in the document group E, for instance, can be calculated by the following formula.

[Formula 1]
$$C(w_i, w_j) = \sum_{[D \in E]} [\beta(w_i, D) \times \beta(w_j, D) \times DF(w_i, D) \times DF(w_j, D)]$$

Here, $\beta(w_i, D)$ is the weight of the index term $w_i$ in the documents D, and

$$\beta(w_i, D) = 1,$$

$$\beta(w_i, D) = TF(w_i, D),$$

$$\beta(w_i, D) = TF(w_i, D) \times IDF(w_i, P),$$

and the like can be considered.
Since $DF(w_i, D)$ will be 1 if the index term $w_i$ is included in the documents D, and will be 0 if not, $DF(w_i, D) \times DF(w_j, D)$ will be 1 if the index term $w_i$ and the index term $w_j$ are co-occurring in a single document D, and will be 0 if not. The summation of these values for all documents D belonging to the document group E (after being subject to weighting with $\beta(w_i, D)$ and $\beta(W_j, D)$) is the co-occurrence degree $C(w_i, w_j)$ of the index term $w_i$ and the index term $w_j$.
Incidentally, as a similar example to Formula 1 above, in substitute for $[\beta(w_i, D) \times \beta(w_j, D)]$, the co-occurrence degree $c(w_i, w_j)$ in the documents D calculated based on the co-occurrence status of the index term $w_i$ and the index term $w_j$ in a sentence may also be used. The co-occurrence degree $c(w_i, w_j)$ in the documents D, for instance, can be calculated by the following formula.

[Formula 2]
$$c(w_i, w_j) = \sum_{[sen \in D]} [TF(w_i, sen) \times TF(w_j, sen)]$$

Here, sen signifies each sentence in the documents D. $[TF(w_i, sen) \times TF(w_j, sen)]$ returns a value of 1 or greater if the index terms $W_i$ and $W_j$ in a certain sentence are co-occurring, and returns 0 if not. The summation of these values for all sentences sen in the documents D is the co-occurrence degree $c(w_i, w_j)$ in the documents D.

Calculation of the co-accurrence degree as the weight $\beta(w_i, D) = 1$ based on the foregoing hypothetical case and according to Formula 1 above will be as follows. Foremost, it could be said that the index term $w_1$ and the index term $w_1$, which are the same index terms, are co-occurring in a total of three documents; namely, document $D_1$ to document $D_3$, and, therefore, the co-occurrence degree $C(w_1, w_1) = 3$. Further, since the index term $w_2$ and the index term $W_1$ are co-occurring in a total of two documents; namely, document $D_1$ and document $D_3$, the co-occurrence degree $C(w_2, w_1) = 2$. Similarly, when the co-occurrence degree $C(w_i, w_j)$ regarding all groups with any one of the index terms $w_1$ to $w_{14}$ and any one of the high-frequency terms $W_1$ to $w_7$ is calculated, matrix data of 14 rows and 7 columns as shown in the following table can be obtained.

[Table 2]

| CO-OCCURRENCE DEGREE OF EACH HIGH-FREQUENCY TERM WITH EACH INDEX TERM | | | | | | | |
|---|---|---|---|---|---|---|---|
| | HIGH-FREQUENCY TERMS $w_j$ | | | | | | |
| | $w_1$ | $w_2$ | $w_3$ | $w_4$ | $w_5$ | $w_6$ | $w_7$ |
| $C(w_1, w_j)$ | 3 | 2 | 3 | 3 | 1 | 1 | 0 |
| $C(w_2, w_j)$ | 2 | 3 | 3 | 3 | 2 | 1 | 1 |
| $C(w_3, w_j)$ | 3 | 3 | 4 | 4 | 2 | 2 | 1 |
| $C(w_4, w_j)$ | 3 | 3 | 4 | 5 | 3 | 3 | 2 |
| $C(w_5, w_j)$ | 1 | 2 | 2 | 3 | 4 | 3 | 3 |
| $C(w_6, w_j)$ | 1 | 1 | 2 | 3 | 3 | 4 | 3 |
| $C(w_7, w_j)$ | 0 | 1 | 1 | 2 | 3 | 3 | 3 |
| $C(w_8, w_j)$ | 3 | 3 | 4 | 5 | 4 | 4 | 3 |
| $C(w_9, w_j)$ | 1 | 1 | 1 | 1 | 0 | 0 | 0 |
| $C(w_{10}, w_j)$ | 1 | 0 | 1 | 1 | 0 | 1 | 0 |
| $C(w_{11}, w_j)$ | 1 | 1 | 1 | 1 | 1 | 0 | 0 |
| $C(w_{12}, w_j)$ | 0 | 1 | 1 | 1 | 1 | 1 | 1 |
| $C(w_{13}, w_j)$ | 0 | 0 | 0 | 1 | 1 | 1 | 1 |
| $C(w_{14}, w_j)$ | 0 | 0 | 0 | 0 | 1 | 1 | 1 |

<3-5. Clustering>

Subsequently, the clustering unit 50 analyzes the clusters of the high-frequency terms based on the co-occurrence degree data calculated at the high-frequency term/index term co-occurrence degree calculating step S40.

In order to analyze the clusters, foremost, the similarity (similarity or dissimilarity) of the co-occurrence degree of each high-frequency term with each index term is calculated (step S50).

In the foregoing hypothetical case, the following table shows the calculation result in a case of adopting the correlation coefficient between 14 dimensional column vectors for each of the high-frequency terms $w_1$ to $w_7$ as the degree of similarity.

[Table 3]

SIMILARITY (CORRELATION COEFFICIENT) OF CO-OCCURRENCE

DEGREE

|  | $w_1$ | $w_2$ | $w_3$ | $w_4$ | $w_5$ | $w_6$ | $w_7$ |
|---|---|---|---|---|---|---|---|
| $w_1$ | 1 | 0.845 | 0.939 | 0.840 | 0.315 | 0.281 | 0.011 |
| $w_2$ |  | 1 | 0.944 | 0.892 | 0.589 | 0.412 | 0.300 |
| $w_3$ |  |  | 1 | 0.948 | 0.548 | 0.499 | 0.279 |
| $w_4$ |  |  |  | 1 | 0.738 | 0.706 | 0.523 |
| $w_5$ |  |  |  |  | 1 | 0.898 | 0.924 |
| $w_6$ |  |  |  |  |  | 1 | 0.928 |
| $w_7$ |  |  |  |  |  |  | 1 |

The lower left part overlaps with the upper right part of the table, and is therefore omitted. According to this table, for instance, the correlation coefficient of the high-frequency term $w_1$ to high-frequency term $w_4$ exceeds 0.8 in all combinations. Further, the correlation coefficient of the high-frequency term $w_5$ to high-frequency term $w_7$ exceeds 0.8 in all combinations. Contrarily, the correlation coefficient is less than 0.8 in all combinations of any one of the terms among high-frequency term $w_1$ to high-frequency term $w_4$ and any one of the terms among high-frequency term $w_5$ to high-frequency term $w_7$.

subsequently, a tree diagram that connects the high-frequency terms in a tree shape is created based on the calculation result of similarity (step S51).

As the tree diagram, it is desirable to create a dendrogram reflecting the dissimilarity between the high-frequency terms to the height (connecting distance) of the connecting position. To briefly explain the rule for creating a dendrogram, foremost, a combination is created by combining the high-frequency terms with the smallest dissimilarity (similarity is maximum) based on the dissimilarity between the high-frequency terms. Further, the process of creating a new combination by combining a combination and other high-frequency terms, or combining a combination and a combination in the order from the smallest dissimilarity is repeated. A hierarchy can thereby be represented. The dissimilarity of a combination and other high-frequency terms, and the dissimilarity of a combination and a combination is updated based on the dissimilarity between the high-frequency terms. As the update method, for instance, a publicly known Ward method or the like is used.

Subsequently, the clustering unit 50 cuts the created tree diagram (step S52). For example, when the connecting distance in the dendrogram is d, the tree diagram is cut at the position of $<d> + \delta\sigma_d$. Here, $<d>$ is the average value of d, and $\sigma_d$ is the standard deviation of d. δ is given in the range of $-3 \leq \delta \leq 3$, and preferably δ = 0.

As a result of this cutting, the high-frequency terms are clustered based on the similarity of the co-occurrence degree with each of the index terms, and a "base" $g_h$ (h = 1, 2, ..., b) including high-frequency term groups belonging to the respective clusters is formed. The high-frequency terms belonging to the same base $g_h$ have a high similarity of the co-occurrence degree with the index terms, and the high-frequency terms belonging to different bases $g_h$ have a low similarity of the co-occurrence degree with the index terms.

Although the explanation based on the foregoing hypothetical case will be omitted regarding the tree diagram and its cutting process, let it be assumed that two bases (number of bases b = 2); namely, the base $g_1$ including the high-frequency term $w_1$ to high-frequency term $w_4$ and the base $g_2$ including the high-frequency term $w_5$ to high-frequency term $w_7$ have been formed.

<3-6. Calculation of Index term/Base Co-occurrence Degree>

Subsequently, the index term/base co-occurrence degree calculating unit 60 calculates the co-occurrence degree (index term/base co-occurrence degree) Co(w, g) with each base formed at the clustering step S53 is calculated for each index term extracted at the index term extracting step S20 (step S60).

The index term/base co-occurrence degree Co(w, g), for instance, can be calculated by the following formula.

[Formula 3]

$$Co\ (w,\ g) = \sum_{[w' \in g,\ w' \neq w]} C\ (w,\ w')$$

Here, the terms w' are high-frequency terms belonging to a certain base g, and terms other than the index terms w to be the measurement target of the co-occurrence degree Co(w, g). The co-occurrence degree Co(w, g) of the index terms w and the base g is the summation of the index terms w and the co-occurrence degree C(w, w') for all the index terms w'.

For instance, in the foregoing hypothetical case, the co-occurrence degree Co $(w_1, g_1)$ of the index terms $w_1$ and the base $g_1$ will be

$$Co(w_1,\ g_1) = C(w_1,\ w_2) + C(w_1,\ w_3) + C(w_1,\ w_4),$$

and, according to Table 2 above, this value will be 2 + 3 + 3 = 8.
Further, the co-occurrence degree Co($w_1$, $g_2$) of the index term $w_1$ and the base $g_2$ will be

$$Co(w_1,\ g_2) = C(w_1,\ w_5) + C(w_1,\ w_6) + C(w_1,\ w_7) = 1 + 1 + 0 = 2.$$

Similarly, the following table shows the calculation of the co-occurrence degree for all index terms w with the bases $g_1$, $g_2$.

[Table 4]

| CO-OCCURRENCE DEGREE Co(w, g) OF INDEX TERMS w AND BASES g | | |
|---|---|---|
| | $g_1$ | $g_2$ |
| $w_1$ | Co $(w_1, g_1)$ = 2+3+3 = 8 | Co$(w_1,g_2)$= = 1+1+0 = 2 |
| $w_2$ | Co$(w_2,g_1)$= 2+3+3 = 8 | Co$(w_2,g_2)$= 2+1+1 = 4 |
| $w_3$ | Co $(w_3, g_1)$ = 3+3+4 =10 | Co $(w_3,g_2)$ = 2+2+1 = 5 |
| $w_4$ | Co $(w_4, g_1)$ = 3+3+4 =10 | Co$(W_4,g_2)$= 3+3+2 = 8 |
| $w_5$ | Co$(w_5, g_1)$ = 1+2+2+3 = 8 | Co$(w_5,g_2)$= 3+3 = 6 |
| $w_6$ | Co$(w_6,g_1)$= 1+1+2+3 = 7 | Co$(w_6,g_2)$= 3+3 = 6 |
| $w_7$ | Co$(w_7,g_1)$= 0+1+1+2 = 4 | Co$(w_7,g_2)$= 3+3 = 6 |
| $w_8$ | Co $(w_8, g_1)$ = 3+3+4+5 =15 | Co$(w_8,g_2)$= 4+4+3 =11 |
| $w_9$ | Co $(w_9, g_1)$ = 1+1+1+1 = 4 | Co$(w_9,g_2)$= = 0+0+0 = 0 |
| $w_{10}$ | Co$(w_{10}, g_1)$= 1+0+1+1 = 3 | Co $(w_{10}, g_2)$ = 0+1+0 = 1 |
| $w_{11}$ | CO $(w_{11},g_1)$ = 1+1+1+1 = 4 | Co $(w_{11}, g_2)$ = 1+0+0 = 1 |
| $w_{12}$ | Co $(w_{12,} g_1)$ = 0+1+1+1 = 3 | Co $(w_{12},g_2)$ = 1+1+1 = 3 |
| $w_{13}$ | Co $(w_{13}, g_1)$ = 0+0+0+1 = 1 | Co $(w_{13}, g_2)$ 1+1+1 = 3 |
| $w_{14}$ | Co $(w_{14}, g_1)$ = 0+0+0+0 = 0 | Co $(w_{14}, g_2)$ = 1+1+1 = 3 |

Incidentally, without limitation to the Co(w, g) above, the index term/base co-occurrence degree can also be calculated according to the following formula.

[Formula 4]

$$Co'(w, g) = \sum_{[D \in E]} [\beta(w, D) \times DF(w, D) \times \Theta(\sum_{[w' \in g,\ w' \neq w]} DF(w', D))]$$

Here, $\theta(X)$ is a function that returns 1 when $X > 0$, and returns 0 when $X \leq 0$. $\theta\left(\Sigma_{\{w' \in g, w' \neq w\}} DF(w', D)\right)$ returns 1 if at least one index term w' that is any one of the high-frequency terms belonging to the base g and other than the measurement target index terms w of the co-occurrence degree is included in the documents D, and returns 0 if not. DF(w, D) returns 1 if at least one measurement target index term w of the co-occurrence degree is included in the documents D, and returns 0 if not. As a result of multiplying $\theta(x)$ to DF(w, D), 1 is returned if the index term w and any index term w' belonging to the base g are co-occurring in the documents D, and 0 is returned if not. When further multiplying the weight $\beta(W, D)$ defined above thereto, and the summation of all documents D belonging to the document group E is the Co'(w, g).

The index term/base co-occurrence degree Co(w, g) of Formula 3 above is obtained through summation (C (w, w')) of the co-occurrence status (1 or 0) of the index terms w and w' in the documents D upon subjecting the weight of $\beta(w, D) \times \beta(w', D)$ for every document group E, and totaling this for the index terms w' in the base g. Meanwhile, the index term/base co-occurrence degree Co'(w, g) of Formula 4 above is obtained by totaling the co-occurrence status (1 or 0) of the index terms w and any index term w' in the base g in the documents D upon subjecting the weight of $\beta(w, D)$ to every document group E.

Accordingly, in either case, a higher index term/base co-occurrence degree can be obtained through co-occurrence with high-frequency terms in more documents D. Moreover, whereas the index term/base co-occurrence degree Co(w, g) of Formula 3 increases or decreases depending on the quantity of the number of index terms w' in the base g co-occurring with the index terms w, the index term/base co-occurrence degree Co'(w, g) of Formula 4 increases or decreases depending on the existing of the index terms w' in the base g co-occurring with the index terms w, regardless of the quantity of co-occurrence w'. When using the index term/base co-occurrence degree Co(w, g) of Formula 3, it is preferable to set the weight to $\beta(w, D) = 1$, and, when using the index term/base co-occurrence degree Co'(w, g) of Formula 4, it is preferable to set the weight to $\beta(w, D) = TF(w, D)$.

<3-7. Calculation of Key(w)>

Subsequently, the key(w) calculating unit 70 calculates the key(w), which is the evaluated score of the respective index terms, based on the co-occurrence degree with the base of each index term calculated at the index term/base co-occurrence degree calculating step S60 (step S70).

The key(w), for instance, can be calculated by the following formula.

[Formula 5]

$$key(w) = 1 - \prod_{[1 \leq h \leq b]} [1 - Co(w, g_h) / F(g_h)]$$

Here, $F(g_h) = \Sigma_{\{w \in E\}} Co(w, g_h)$ is defined. This is the summation of the co-occurrence degree $Co(w, g_h)$ of the index terms w and the base $g_h$ for all index terms w. The key(w) is obtained by dividing $Co(w, g_h)$ by $F(g_h)$ and taking the difference with 1, and multiplying this to all bases $g_h(h = 1, 2, ..., b)$ and taking the difference with 1.

Incidentally, although the Co(w, g) of Formula 3 was used as the index term/base co-occurrence degree, the Co'(w, g) of Formula 4 can also be used as described above.

For example, in the foregoing hypothetical case, when calculating the $F(g_h)$, according to Table 4,

$$F(g_1) = Co(w_1, g_1) + Co(w_2, g_1) + ... + Co(w_{14}, g_1) = 85$$

and

$$F(g_2) = Co(w_1, g_2) + Co(w_2, g_2) + ... + Co(w_{14}, g_2) = 59.$$

Thus, the key(w) will be

$$key(w_1) = 1 - (1 - Co(w_1, g_1)/85) (1 - Co(w_1, g_2)/59)$$

$$= 1 - (1 - 8/85) (1 - 2/59)$$

$$= 0.125; \text{ and}$$

$$key(w_2) = 1 - (1 - Co(w_2, g_1)/85)\ (1 - Co(w_2, g_2)/59)$$
$$= 1 - (1 - 8/85)\ (1 - 4/59)$$
$$= 0.156.$$

Similarly, when the key(w) for all index terms is calculated, this can be represented in the following table.

[Table 5]

| INDEX TERMS | key(w) | rank |
|---|---|---|
| $w_1$ | 1-(1- 8/85)(1 - 2/59) = 0.125 | 8 |
| $w_2$ | 1-(1 - 8/85)(1- 4/59) = 0.156 | 6 |
| $w_3$ | 1-(1 - 10/85)(1 - 5/59) = 0.192 | 3 |
| $w_4$ | 1-(1 - 10/85) (1 - 8/59) = 0.237 | 2 |
| $w_5$ | 1-(1 - 8/85)(1 - 6/59) = 0.186 | 4 |
| $w_6$ | 1-(1 -7/85)(1- 6/59) = 0.175 | 5 |
| $w_7$ | 1-(1 - 4/85)(1 - 6/59) = 0.144 | 7 |
| $w_8$ | 1-(1 - 15/85)(1 - 11/59) = 0.330 | 1 |
| $w_9$ | 1-(1 - 4/85)(1 - 0/59) = 0.047 | 14 |
| $w_{10}$ | 1-(1 - 3/85) (1 - 1/59) = 0.052 | 12 |
| $w_{11}$ | 1-(1 - 4/85)(1 - 1/59) = 0.063 | 10 |
| $w_{12}$ | 1-(1 - 3/85)(1 - 3/59) = 0.084 | 9 |
| $w_{13}$ | 1- (1 - 1/85) (1-3/59) = 0.062 | 11 |
| $w_{14}$ | 1-(1 - 0/85)(1 - 3/59) = 0.051 | 13 |

The right-hand column of this table shows the ranking when arranging the key(w) in descending order from the largest key(w).

In order to explain the characteristics of the key(w), the document frequency DF(E) of each index and the key(w) ranking are added to a table that is the same as Table 1 and shown below.

[Table 6]

| TF(D), GF(E), ETC OF EACH INDEX TERM | | | | | | | | | | |
|---|---|---|---|---|---|---|---|---|---|---|
| | | DOCUMENTS | | | | | | GF(E) | DF(E) | Key(w) RANK |
| | | $D_1$ | $D_2$ | $D_3$ | $D_4$ | $D_5$ | $D_6$ | | | |
| INDEX TERMS | $w_1$ | 3 | 3 | 3 | 0 | 0 | 0 | 9 | 3 | 8 |
| | $w_2$ | 3 | 0 | 3 | 3 | 0 | 0 | 9 | 3 | 6 |
| | $w_3$ | 3 | 3 | 3 | 3 | 0 | 0 | 12 | 4 | 3 |
| | $w_4$ | 3 | 3 | 3 | 3 | 3 | 0 | 15 | 5 | 2 |
| | $w_5$ | 0 | 0 | 3 | 3 | 3 | 3 | 12 | 4 | 4 |
| | $w_6$ | 0 | 3 | 0 | 3 | 3 | 3 | 12 | 4 | 5 |
| | $w_7$ | 0 | 0 | 0 | 3 | 3 | 3 | 9 | 3 | 7 |
| | $w_8$ | 1 | 1 | 1 | 1 | 1 | 1 | 6 | 6 | 1 |
| | $w_9$ | 1 | 0 | 0 | 0 | 0 | 0 | 1 | 1 | 14 |
| | $w_{10}$ | 0 | 1 | 0 | 0 | 0 | 0 | 1 | 1 | 12 |
| | $w_{11}$ | 0 | 0 | 1 | 0 | 0 | 0 | 1 | 1 | 10 |
| | $w_{12}$ | 0 | 0 | 0 | 1 | 0 | 0 | 1 | 1 | 9 |
| | $w_{13}$ | 0 | 0 | 0 | 0 | 1 | 0 | 1 | 1 | 11 |
| | $w_{14}$ | 0 | 0 | 0 | 0 | 0 | 1 | 1 | 1 | 13 |

As evident from this table, the key(w) ranking is largely influenced by the ranking of the document frequency DF(E) in the document group E. For example, the index term $w_8$ with the most DF(E) has the first-ranking key(w), and the index terms $w_4$ with the second-most DF(E) has the second-ranking key(w), and the index terms $w_3$, $w_5$, $w_6$ follow behind.

Index terms with a large document frequency DF(E) in the document group E are able to co-occur with high-frequency terms in more documents. Therefore, a greater index term/base co-occurrence degree Co(w, g) or Co'(w, g) can be obtained. This is considered to be the reason that the key(w) ranking is largely influenced by the DF(E) ranking.

Incidentally, when the weight $\beta$ (w, D) to be used in the calculation of the co-occurrence degree is changed to TF(w, D), it is considered that the ranking of the global frequency GF(E) in the document group E will largely influence the key(w) ranking.

Further, as evident when comparing the index terms $w_9$ to $w_{14}$ in Tables 2 and 6, the key(w) is greater when the co-occurring high-frequency terms are extended over more bases. For instance, while the high-frequency terms co-occurring with the index terms $w_{10}$ to $w_{13}$ are extended over two bases, the high-frequency terms co-occurring with the index terms $w_9$ and $w_{14}$ are biased toward one base. In addition, the key(w) of the index terms $w_{10}$ to $w_{13}$ is greater than that of the index terms $w_9$ and $w_{14}$.

Further, as even when comparing the index terms $w_{10}$ to $w_{13}$ in Tables 2 and 6, the key(w) tends to be greater when the index terms co-occur with more high-frequency terms. For example, among the index terms $w_{10}$ to $w_{13}$, index term $w_{12}$ that is co-occurring with the most high-frequency terms has the largest key(w), and index term $w_{11}$ co-occurring with the second-most high-frequency terms has the next largest key(w).

Incidentally, as a substitute for the foregoing key(w) as the evaluated score of the respective index terms, the following formula may also be used.

[Formula 6]

$$key'(w) = (1/\Phi)\ (1/b) \times \sum_{h=1}^{b} Co(w, g_h)$$

Here, $\Phi$ is an appropriate standardization constant and, for instance, $\Phi = \Sigma_{h=1}^{b} F(g_h)$ - The $F(g_h)$ is as defined in Formula 5. The key'(w) is obtained by overlapping $(1/\Phi)$ the average value of the co-occurrence degree $Co(w, g_h)$ of the index terms w and the base $g_h$ in all bases $g_h$ (h = 1, ..., b).

Further, as a substitute for the foregoing key(w) as the evaluated score of the respective index terms, the following formula may also be used.

[Formula 7]

$$key''(w) = (1/b) \times \sum_{h=1}^{b} [Co(w, g_h) / F(g_h)]$$

The key''(w) is obtained by dividing the co-occurrence degree $Co(w, g_h)$ of the index terms w and the base $g_h$ by the $F(g_h)$ and seeking the average value in all bases $g_h$ (h = 1, ..., b).
When expanding the product in the key(w) of Formula 5 and ignoring the minute amounts of a higher order

$$O[(Co(w, g_h) / F(g_h))^2],$$

$$key(w)$$
$$= 1 - [1 - Co(w,g_1) / F(g_1)] \times [1 - Co(w,g_2) / F(g_2)] \times \ldots$$
$$\approx 1 - 1 + Co(w,g_1) / F(g_1) + Co(w,g_2) / F(g_2) + \ldots.$$

Accordingly, it can be said that key''(w) (1/b) key (w).

<3-8. Calculation of Skey(w)>

Subsequently, the Skey(w) calculating unit 80 calculates the Skey(w) score based on the key(w) score of each index term calculated at the key(w) calculating step 570, the GF(E) of each index term calculated at the high-frequency term extracting step S31, and the IDF(P) of each index term (step S80).
The Skey(w) score is calculated by the following formula.

[Formula 8]

$$Skey(w) = GF(w, E) \times \ln[key(w) \div (DF(w, P)/N(P))]$$
$$= GF(w, E) \times [IDF(P) + \ln key(w)]$$

The GF(w, E) is given in a large value to terms that often appear in the document group E, the IDF(P) is given in a large value to terms that are rare in all documents P and unique to the document group E, and the key(w) is a score that is largely influenced by the DF(E) and given in a large value to terms that co-occur with more bases as described above. Larger the values of such GF(w, E), IDF(P) and key(w), larger the Skey(w).
The TF * IDF which is often used as weighting against the index terms is the product of the index term frequency TF, and the IDF which is the logarithm of the reciprocal of the appearing probability DF(P) / N(P) of index terms in the document set. The IDF yields the effect of suppressing the contribution of index terms appearing with a high probability in the document set, and adding great weight to index terms appearing biased toward a specific document. Nevertheless, there is also a drawback in that the value will jump merely because the document frequency is small. As explained below, the Skey(w) score yields the effect of improving such drawback.
In the analytical target document group E, assuming that the probability of documents including the index terms w appearing is P(A), the probability of documents including (the index terms belonging to) a base is P(B), and the probability of documents including both the index terms w and base appearing (= probability of co-occurring in documents) is P(A∩B), this can be represented with

$$P(A) = DF(w, E) / N(E)$$

and

$$P(A \cap B) = key(w).$$

Thereby, the probability (conditioned probability) of co-occurring with the base when the documents including the index terms w in the document group E are selected will be

[Formula 9]

$$P(B|A) = P(A \cap B) / P(A)$$
$$= key(w) \times N(E) / DF(w, E)$$

Further, when giving consideration to the assumption of uniformity (IDF(E) = IDF (P)), and taking the logarithm of the conditioned probability, this will be

[Formula 10]

$$\ln P(B|A) = \ln[key(w) \times N(P) / DF(w, P)]$$
$$= \ln key(w) + IDF(P)$$

This value will be equivalent to IDF(P) if key(w) = 1. In addition, in the limitation of DF $\rightarrow$ 0, since N(P) / DF(w, P) $\rightarrow$ m and key(w) $\rightarrow$ 0, by taking the product of N(P) / DF(w, P) and key(w), it is possible to improve the foregoing drawback where the IDF value jumps specifically when the DF value is small. Since the Skey(w) score of Formula 8 is the product of the GF(w, E), and the ln key(w) + IDF(P) of Formula 10, it can also be referred to as the GF(E) * IDF(P) corrected with the co-occurrence degree.

Incidentally, in the calculation of the Skey(w) according to Formula 8, the key'(w) of Formula 6 and the key" (w) of Formula 7 may be used in substitute for the key(w) of Formula 5 as described above.

When the Skey(w) score in the case of using the key" (w) of Formula 7 is indicated as Skey (key"), and the Skey(w) score in the case of using the key(w) of Formula 5 is indicated as Skey(key), and the two are compared,

$$Skey(key) - Skey(key'')$$
$$= GF(w, E) \times [\ln key(w) - \ln key''(w)]$$
$$\approx GF(w, E) \times \ln b$$

Thus, the behavior of the Skey(w) using the key" (w) of Formula 7 and the behavior of the Skey(w) using the key(w) of Formula 5 substantially coincide excluding the difference in the number of bases b, and the Skey(w) score ranking will not be influenced significantly unless the number of bases b is large.

<3-9. Extraction of Keywords>

Subsequently, the keyword extracting unit 90 extracts a prescribed number of high ranking index terms in the Skey(w) score of each index term calculated at the Skey(w) calculating step S80 as the keywords of the analytical target document group (step S90).

<3-10. Effect of First Embodiment>

According to the present embodiment, keywords are extracted upon valuing index terms that co-occur with high-frequency terms belonging to more bases, and that co-occur with high-frequency terms in more documents. Since high-frequency terms that belong to different bases are terms that have a dissimilar co-occurrence degree with each index term, it could be said that index terms that co-occur with more bases bridge the themes and topics of the document group E. Further, index terms that co-occur with high-frequency terms in more documents have a high document frequency DF (E) in the document group E to begin with, and it could be said that these terms represent the themes and topics common to the document group. As a result of valuing the foregoing index terms, it is possible to automatically extract keywords that accurately represent the characteristics of the document group E including a plurality of documents D.

Further, as a result of making the weight $\beta(w, D) = 1$, the influence of the DF(E) ranking on the key(w) score will increase, and it will be possible to extract keywords upon valuing terms that appear in numerous documents within the document group E.

Moreover, by adding the appearance frequency GF(E) in the document group E, and the IDF(P) as the logarithm of the reciprocal of the document frequency in all documents P, it is possible to extract keywords upon valuing index terms that frequently appear in the document group E or index terms unique to the document group E.

<4. Configuration of Second Embodiment>

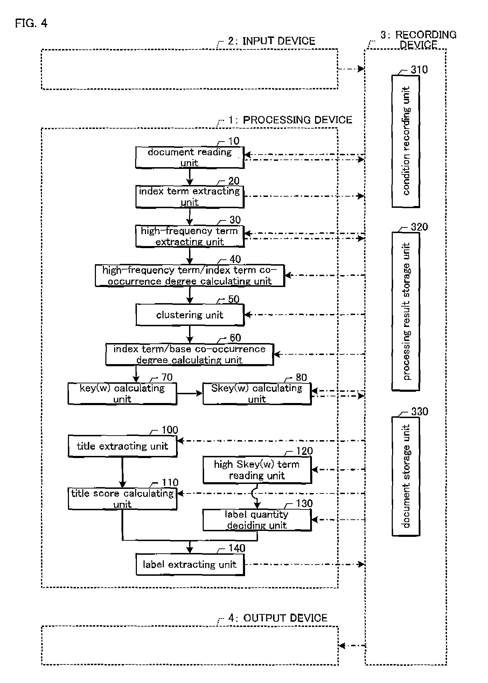

Fig. 4 is a diagram explaining the details of the configuration and function in the keyword extraction device according to the second embodiment. Components that are the same as those in Fig. 2 of the first embodiment are given the same reference numerals, and the explanation thereof is omitted.

The keyword extraction device of the second embodiment comprises, in addition to the constituent elements of the first embodiment, a title extracting unit 100, a title score calculating unit 110, a high Skey(w) term reading unit 120, a label quantity deciding unit 130, and a label extracting unit 140 in the processing device 1. Further, among the constituent elements of the first embodiment, it is not necessary to provide the keyword extracting unit 90, and the calculation result of the Skey(w) calculating unit 80 will be stores as is in the processing result storage unit 320.

The title extracting unit 100 extracts the title of each document from the document data read with the document reading unit 10 and stored in the processing result storage unit 320. For instance, if the documents are patent documents, descriptions of the "Title of the Invention" will be extracted. Data of the extracted title is sent directly to the title score calculating unit 110 and used for processing, or sent to and stored in the processing result storage unit 320 of the recording device 3.

The title score calculating unit 110 calculates the title score $\tau_k$ concerning the title of each document based on the data of document titles extracted with the title extracting unit 100, and the index term data of the document group E extracted with the index term extracting unit 20. The title score $\tau_k$ is a score showing the value as the label representing the characteristics of the document group E. The calculation method of the title score $\tau_k$ will be described later. Data of the calculated title score $\tau_k$ is sent directly to the label extracting unit 140 and used for processing, or sent to and stored in the processing result storage unit 320 of the recording device 3.

The high Skey(w) term reading unit 120 extracts a prescribed number of high ranking index terms in the Skey(w) score based on the Skey(w) of each index term W calculated by the Skey(w) calculating unit 80 and stored in the processing result storage unit 320. The number of index terms to be extracted, for instance, shall be 10 terms. Data of the extracted high Skey(w) term is sent directly to the label quantity deciding unit 130, or sent to and stored in the processing result storage unit 320 of the recording device 3.

The label quantity deciding unit 130 calculates the keyword adaptation $k$ as an index showing the uniformity of contents of the document group E based on the data of the high Skey(w) term extracted with the high Skey(w) term reading unit 120. Then, the number of labels to be extracted is decided based on the keyword adaptation $\kappa$. The calculation method of the keyword adaptation $\kappa$ and the deciding method of the number of labels will be described later. Data of the decided number of labels is sent directly to the label extracting unit 140 and used for processing, or sent to and stored in the processing result storage unit 320 of the recording device 3.

The label extracting unit 140 extracts the number of titles decided with the label quantity deciding unit 130 based on the title score $T_k$ of each title calculated by the title score calculating unit 110 and uses them as a label of the document group E. Specifically, titles are sorted in descending order of the title score $\tau_k$, and the number of titles described above is extracted.

In the second embodiment, these labels correspond to the keywords of the invention.

<5. Operation of Second Embodiment>

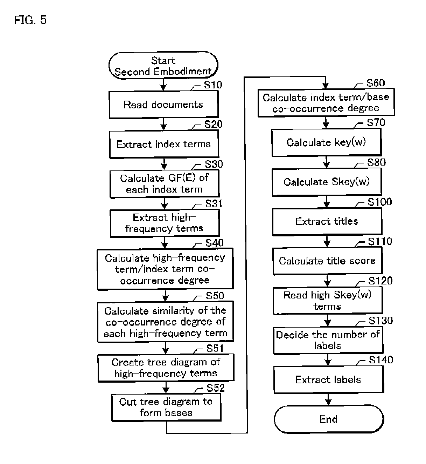

Fig. 5 is a flowchart showing the operational routine of a processing device 1 in the keyword extraction device of the second embodiment. The keyword extraction device according to the second embodiment calculates the Skey(w) after performing the same processing as the first embodiment (up to step S80). The processing for calculating the Skey(w) is the same as the processing of Fig. 3, and the explanation thereof is omitted.

<5-1. Extraction of Title>

After calculating the Skey(w), the keyword extraction device of the second embodiment extracts the title $a_k$ of each document from the data of the respective documents $D_k$ ($k = 1, 2, ..., N(E)$) belonging to the document group E read at the document reading step S10 in the title extracting unit 100 (step S100). Since one title will be extracted from one document $D_k$, the same number of title $a_k$ as the number of documents $N(E)$ will be extracted.

Further, the title extracting unit 100 creates a string concatenation (title sum) s of the titles in the document group E from the title $a_k$ of each document. The title sum s can be represented with the following formula.

[Formula 11]

$$s = str \prod_{k=1}^{N(E)} a_k$$

Here, strⅡ implies the string sum. It is desirable to perform uniform processing of codes in advance to the title sum s according to the specification of the spacing software. For instance, when deleting symbols with spacing processing, as pre-processing, "-" (full-width minus) and "-" (full-width dash) are unified with "-" (macron).
Then, the title terms obtained by spacing the title sum s are made into an index term dictionary.

Incidentally, as the index term dictionary, as a substitute for the index terms obtained from the title sum s, the index terms obtained by spacing from the contents of the documents in the document group E can also be made into an index term dictionary. Further, only a prescribed number (for instance, 30) of high ranking index terms in the keywords score Skey(w) can be made into an index term dictionary.
Although there are several methods of obtaining an index term dictionary, the index terms in the document group E obtained as described above can be generally represented with $w_v$ (v = 1, 2, ..., W').

<5-2. Calculation of Title Score>

Subsequently, the title score calculating unit 110 calculates the title score $\tau_k$ of the titles of the respective documents (step S110). Calculation of the title score $\tau_k$ uses the title appearance ratio $x_k$ and the title term appearance ratio average $y_k$ explained below.

Title appearance ratio $x_k$

In order to calculate the title appearance ratio $x_k$, the appearance ratio $x_k$ of the title $a_k$ in the title sum s (in relation to the number of documents N(E)) is sought. The title appearance ratio $x_k$ can be obtained by the following formula.

[Formula 12]

$$x_k = (1 / N(E)) \, TF(a_k, s)$$

Title term appearance ratio average $y_k$

In order to calculate the title term appearance ratio average $y_k$, foremost, the genus $m_k$ of the index terms $w_v$ (title terms) that appeared in each title $a_k$ is sought.

[Formula 13]

$$m_k = \sum_{v=1}^{w'} \theta(TF(w_v, a_k))$$

Here, θ(X) is a function that returns 1 if X > 0, and returns 0 if X ≤ 0. The status (1 or 0) of the index terms $w_v$ in the title $a_k$ can be sought with θ(TF($W_v$, $a_k$)). The summation of this for all index terms $w_v$(v = 1, 2, ..., W') is the genus $m_k$ of the title terms.

Subsequently, the appearance ratio $f_k$ in the title sum s (in relation to the number of documents N(E)) for the title terms that appeared in each title $a_k$ of each document is sought.

[Formula 14]

$$f_k = (1/N(E)) \sum_{v=1}^{w'} TF(w_v, s) \times IDF(w_v, P) \times \Theta(TF(w_v, a_k))$$

Here, the frequencies of the index terms $w_v$ in the title sum s is given with the $TF(w_v, s)$. The appearance ratio $f_k$ is obtained by totaling only the $TF(w_v, s)$ among the index terms $w_v$ which appear in the title $a_k$ (index terms $w_v$ where $\theta$ $(TF(w_v, a_k)) = 1$) with the addition of weight ($IDF(w_v, P)$), and dividing the result with the number of documents $N(E)$.

Further, in order to prevent long titles from attaining high points, the genus average $y_k$ of the title term appearance ratio is obtained by dividing the title term appearance ratio $f_k$ with the genus $m_k$ of the index terms $w_v$ (title terms) that appeared in each title $a_k$.

[Formula 15]

$$y_k = f_k / m_k$$

Title score $T_k$

The title score $T_k$ is sought with the increased function of the title appearance ratio $x_k$ and the title term appearance ratio average $y_k$. For instance, it is preferable to seek the title score $\tau_k$ with the geometrical mean of the following formula.

[Formula 16]

$$\tau_k = \sqrt{(x_k \times y_k)}$$

Further, the title score $T_k$ can also be sought with the following formula.

[Formula 17]

$$\tau_k' = (x_k + y_k) / 2$$

$$\tau_k'' = \sqrt{(x_k^2 + y_k^2)}$$

After seeking the title score $\tau_k$ for each title $a_k$, the same titles are subject to computer-aided name identification (if there are a plurality of same titles, one is left and the others are deleted). Then, the titles are sorted in the descending order of the sought title score $T_k$, and each title is made to be $T_1$, $T_2$, ... from the higher ranking $T_k$.

<5-3. Reading of High Skey Terms>

Subsequently, the high Skey(w) term reading unit 120 extracts a prescribed number (t number) of high ranking index terms in the Skey(w) score (step S120).

<5-4. Deciding of Label Quantity>

Subsequently, the label quantity deciding unit 130 calculates the keyword adaptation $\kappa$ showing the uniformity of contents in the document group E, and decides the number of labels to be extracted (step S130).

The keyword adaptation $k$ is calculated by the following formula upon making a prescribed number (t number) of high ranking index terms in the Skey(w) score to be $w_r$ ($r = 1, 2, ..., t$).

[Formula 18]

$$\kappa = (1 \diagup N(E)) (1 \diagup t) \sum_{r=1}^{t} DF(w_r, E)$$

In other words, the keyword adaptation $k$ is obtained by seeking the average $(1/t) \Sigma_{r=1}^{t} DF(w_r, E)$ of the document frequency DF(E) in the document group E for the t high ranking index terms $w_r$ in the Skey(w) score, and dividing it by the number of documents N(E) of the document group E.

$\kappa$ represents the occupancy of terms evaluated as being keywords with the Skey(w) in the document group E. If the document group E is configured from one field, the mutual keywords will be deeply associated, and the occupancy will be high since they will not be of a great variety. Contrarily, if the document group E is configured from a plurality of fields, the number of documents per field will be few, and the keywords will be of a great variety. Thus, the occupancy will be low. Accordingly, if the value of $\kappa$ is high, it can be determined that the uniformity of contents in the document group E is high, and, if the value of $k$ is low, it can be determined that the document group E is configured from a plurality of fields.

The number of labels, which are keywords to be extracted in the second embodiment, and the mode of output thereof are decided in accordance with the value of the sought keyword adaptation $\kappa$. For instance,

(1) If $0.55 \leq \kappa$, the highest ranking "$T_1$" of $\tau_k$ is labeled as is;
(2) If $0.35 \leq \kappa < 0.55$, the highest ranking $T_1$ of $\tau_k$ is labeled as "$T_1$ related";
(3) If $0.2 <_K <0.35$, up to the second highest ranking $T_2$ of $\tau_k$ are labeled as "$T_1$, $T_2$, etc."; and
(4) If $\kappa \leq 0.2$, this is labeled as "Others".

Incidentally, the threshold value of $k$ is not limited to the foregoing set of [0.55, 0.35, 0.2], and other values may also be selected. For instance, when the Skey(w) score is calculated using the key'(w) of Formula 6 as a substitute for the key(w) of Formula 5, it is preferable to us the K threshold value set of [0.3, 0.2, 0.02] in substitute for the foregoing K threshold value set.

<5-5. Extraction of Labels>

Subsequently, the label extracting unit 140 extracts labels based on the title score $T_k$ of each title calculated at the title score calculating step S110, and the number of labels and mode of output decided at the label quantity deciding step S130 (step S140).

<5-6. Effect of Second Embodiment>

According to the present embodiment, the Skey(w) score calculated in the first embodiment is used to decide the number of keywords (labels) to be extracted based on the appearance frequency of high ranking high-frequency terms of the Skey(w) score in the respective documents. Thereby, it is possible to automatically extract an appropriate number of keywords representing the characteristic of the document group in accordance with the degree of uniformity of the contents in the document group E including a plurality of documents D.

Further, since the keywords (labels) are extracted upon valuing terms with a high appearance ratio based on the appearance ratio of terms in the title of each document, it is possible to extract keywords that accurately represent the contents of the document group.

<6. Specific Examples>

As a specific example of extracting keywords according to the first embodiment and the second embodiment, explained is a case of respectively extracting keywords from 27 document groups obtained by analyzing the clusters of roughly 850 cases of patent gazettes (Japanese examined patent publications or patent journals) for the past 10 years with a certain household chemical manufacturer as the applicant.

Clusters were analyzed by representing roughly 850 documents as vectors having as its component the TF * IDF(P) of index terms included in each of the documents, creating a dendrogram based on the mutual similarity of these document vectors, and cutting the dendrogram at the position of $<d> + \sigma_d$ when the connecting distance in the dendrogram is d. Here, $<d>$ is the average value of d, and $\sigma_d$ is the standard deviation of d.

The top three high ranking terms in the Skey(w) for each of the 27 document groups obtained as described above were made to be the keywords according to the first embodiment. Further, the keyword adaptation $\kappa$ was calculated

and labels according to the second embodiment were created based thereon. Incidentally, as the index term dictionary used for extracting labels according to the second embodiment, the title term obtained by leaving spaces between the title sum s as described above was used. Nevertheless, even when index terms obtained by leaving spaces between the contents of documents in the document group E were used, labels were created, and the mark of "*" was indicated in parallel when a different result from the case of using the title sum s was obtained.

The order of posting the document groups is according to the descending order of the keyword adaptation K, whereby differences in the mode of indicating the labels can be comprehended at a glance.

Further, separate from the extraction of keywords according to the first embodiment and the second embodiment, a human being read the foregoing 27 document groups and gave a title deemed to be optimal to each document group. The title given by the human being and the number of documents N(E) and keyword adaptation K are indicated at the top of each document group.

(1) $0.55 \le \kappa$

(1-1) Caries-prevention agent (N(E) = 4, K = 1.0)
Label: "Caries-prevention agent"
Keywords: [Erosion, mutans, streptococcus]

(1-2) External preparation for skin (N(E) = 6, K 0.983)
Label: "External preparation for skin"
Keywords: [Ellagic, polyoxypropylene, polyoxyethylene]

(1-3) Softener (N(E) = 10, $K$ = 0.97)
Label: "Softener composition"
Keywords: [Analysis, alkenyl, hydroxyalkyl]

(1-4) Water slurry additive of carbon fines (N(E) = 7, $k$ = 0.8857)
Label: "Water slurry additive of carbon fines"
Keywords: [Monomer, sulfone, requisite]

(1-5) High bulk density granulated detergent (N(E) = 21, $k$ = 0.876)
Label: "High bulk density granulated detergent composition" *Granulated detergent composition
Keywords: [Fatty acid, detergent, bulk]

(1-6) Low-water soluble sheet (N(E) = 6, K = 0.8)
Label: "Low-water soluble, water-absorbing sheet-shaped body"
Keywords: [Low-water solubility, carboxyl ethyl cellulose, carboxyl methyl cellulose]

(1-7) Hydraulic mineral material (N(E) = 9, $\kappa$ = 0.733)
Label: "Compounding agent for hydraulic mineral material"
Keywords: [Emulsion, transfer, cross link]

(1-8) Deinking agent (N(E) = 12, K = 0.6583)
Label: "Floatation deinking agent"
Keywords: [EO, PO, XO]

(1-9) High bulk density granulated detergent (N(E) = 21, $\kappa$ = 0.65)
Label: "Manufacturing method of high bulk density detergent composition"
Keywords: [Detergent, bulk, knead]

(1-10) Conductive resin (N(E) = 13, $k$ = 0.6384)
Label: "Conductive resin composition"
Keywords: [Black, carbon, knead]

(1-11) Cement/ceramic molding (N(E) = 26, $\kappa$ = 0.6346)
Label: "Ceramic molding binder"
Keywords: [Meta, acryl, cryl]

(1-12) High bulk density granulated detergent (N(E) = 23, $k$ = 0.626)
Label: "High bulk density granulated detergent composition"
Keywords: [Neo, surface boundary, detergent]

(1-13) Sulfonation (N(E) = 11, $k$ = 0.5909)
Label: "Manufacturing method of low-molecular weight styrene polymer"
Keywords: [Sulfone, solvent, styrene]

(1-14) Toothbrush (N(E) = 11, $k$ = 0.5636)
Label: "Toothbrush"
Keywords: [Filling, brushing, brush]

(2) 0.35 s $k$ < 0.55

(2-1) Bleach (N(E) = 10, $k$ = 0.49)
Label: "Bleach composition related items"
Keywords: [Bleach, detergent, agent]

(2-2) Denture stabilizer, denture cleanser (N(E) =11, $\kappa$ = 0.41)
Label: "Denture cleanser related items"
Keywords: [Denture, polypropyleneoxide, mix]

(2-3) Oral composition (N(E) = 62, $\kappa$ = 0.395)
Label: "Oral composition related items"
Keywords: [Oral, composition, mix]

(2-4) Chitin, chitosan (N(E) = 13, $\kappa$ = 0.3769)
Label: "Chitin or chitosan refining method related items"
Keywords: [Chito, san, chitin]

(2-5) Carotene (N(E) = 9, $\kappa$ = 0.3666)
Label: "Carotene refining method related items" *Treating method of natural fat
Keywords: [Carotene, concentration, palm carotene]

(3) 0.2<$\kappa$<0.35

(3-1) Hair care cosmetics/aerosol cosmetics (N(E) = 15, $\kappa$ = 0.3466)
Label: "Cosmetics, hair care cosmetics, etc."
Keywords: [Agent, cosmetics, silica beads]

(3-2) Dentifrice composition (N(E) = 56, $\kappa$ = 0.3071)
Label: "Dentifrice composition, cleanser composition, etc."
Keywords: [Dentifrice, composition, weight]

(3-3) Fatty acid ester, soap (N(E) = 33, $\kappa$ = 0.2696)
Label: "Soap composition, manufacturing method of ester, etc."
Keywords: [Fatty acid, ester, soap]

(3-4) Hair care cosmetic related items (N(E) = 108, $\kappa$ = 0.438)
Label: "Cleanser composition, liquid cleanser composition, etc."
Keywords: [Carbon, alkyl, alkenyl]

(3-5) Softener, LCD cleanser, etc. (N(E) = 38, $\kappa$ = 0.381)
Label: "Softener composition, spray-type water and oil repellent composition, etc."
Keywords: [Alkyleneoxide, carbon, fat]

(3-6) General cleansers (N(E) = 41, $\kappa$ = 0.3292)
Label: "Cleanser composition, liquid cleanser composition, etc."

Keywords: [Surface boundary, aerosol, anion]

(3-7) Oral composition, etc. (N(E) 67, $\kappa$ = 0.3194)
Label: "Oral composition, dispersant, etc." *Oral composition, deodorant composition
Keywords: [Acid, salt, oral]

(4) $\kappa \leq 0.2$

(4-1) Others (N(E) = 229, $\kappa$ = 0.011)
Label: "Others"
Keywords: [Documents, loading, mutan]

As shown above, the label of each document group according to the second embodiment tended to basically match the title given to each document group by a human being.

Further, as the keywords of each document group according to the first embodiment, terms showing specific technical content were chosen in addition to general titles of the target of invention.

Incidentally, there were cases where the same label was extracted for different document groups ("High bulk density granulated detergent composition" in (1-5) and (1-12), "Cleanser composition, liquid cleanser composition, etc." in (3-4) and (3-6)), and cases where the same label was partially extracted for different document groups ("Softener composition" in (1-3) and "Softener composition, spray-type water and oil repellent composition, etc." in (3-5); and "Oral composition related items" in (2-3) and "Oral composition, dispersant, etc." in (3-7)). Nevertheless, it would be possible to clearly categorize the technical content by referring to the keyword information according to the first embodiment.

Further, due to the used morphological analysis software, there were cases where certain keywords according to the first embodiment that seem insignificant at a glance ("meta" and "cryl" in (1-11), "neo" in (1-12), "chito" and "san" in (2-4)). Nevertheless, it should be noted that these terms appear as a part of the correct keywords to be extracted. In order to correctly extract these terms, after calculating Skey(w), an integrated term dictionary filter is used in the keyword extracting unit 90 to extract Skey(w) from the higher ranking in order that matches the filter. In the illustrated example, the extracted terms will be "metacryl" in (1-11), "nonian" in (1-12), and "chitosan" in (2-4).

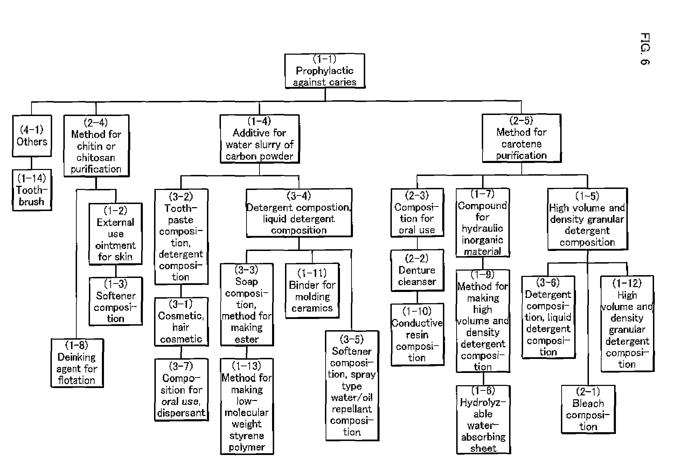

Fig. 6 is a reference diagram showing an example of entering the keywords extracted with the keyword extraction device of the invention in a document correlation diagram illustrating the mutual relationship of documents. This document correlation diagram shows the mutual substantial relationship and temporal relationship of the 27 document groups shown in the foregoing specific example.

To briefly explain the method of creating this diagram, foremost, the average value of the filing date data of documents belonging to each of the 27 document groups was calculated as the time data of each group. Subsequently, the document group (in this case, "(1-1) Caries-prevention agent ") with the oldest time data among the 27 groups was removed, and each of the remaining 26 document groups was subject to a vector representation. In order to subject the document group E of each group to a vector representation, GF(E) * IDF(P) in each group was calculated for each index term, and represented as a multidimensional vector with GF(E) * IDF(P) as components.

Then, a dendrogram is created based on the mutual similarity of the 26 vectors created as described above, and clusters were extracted by cutting the dendrogram at the position of <d> + $\sigma_d$ when the connecting distance in the dendrogram is d. Here, <d> is the average value of d, and $\sigma_d$ is the standard deviation of d. Branch lines in the number of extracted clusters (4 in this case) were drawn from the oldest document group "(1-1) Caries-prevention agent".

Subsequently, for each cluster, the oldest document group (here, "(1-4) Water slurry additive of carbon fines, "(2-4) Chitin or chitosan refining method related items", "(2-5) Carotene refining method related items", and "(4-1) Others" were selected for the respective clusters) was removed, a dendrogram was created, and clusters were extracted similar to the above. The same process was repeated until there are three or less document groups in the clusters. With clusters having three or less document groups, these document groups were aligned in order from the document group having the oldest time data.

The document correlation diagram created according to the above shows the classification based on the content of documents and which is temporally arranged, and is useful in analyzing the transition of development trends of household chemical manufacturers, which were the target of research. In the reference example shown in Fig. 6, since the labels (or the keywords of the first embodiment) extracted according to the method of the second embodiment of the invention for each document group are entered in the document correlation diagram, it is possible to comprehend the transition of development trends at a glance.

<7. Configuration of Third Embodiment>

The third embodiment of the invention extracts keywords from each analytical target document group $E_u$ using

data of a document group set S including a plurality of document groups $E_u$ (u = 1, 2, .. , n; wherein n is the number of document groups). Although it would be preferable to make the plurality of document groups $E_u$ the individual clusters obtained by clustering the document group set S, contrarily, it would also be possible to collect a plurality of document groups $E_u$ to configure the document group set S.

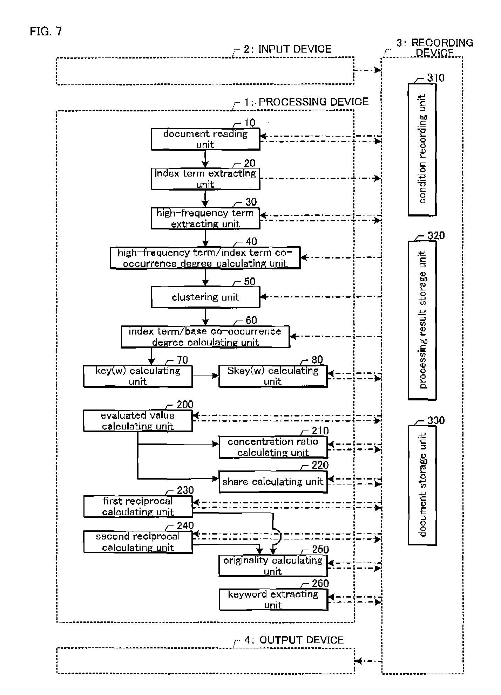

Fig. 7 is a diagram explaining the details of the configuration and function in the keyword extraction device according to the third embodiment. Components that are the same as those in Fig. 2 of the first embodiment are given the same reference numerals, and the explanation thereof is omitted.

The keyword extraction device of the third embodiment, in addition to the constituent elements of the first embodiment, comprises an evaluated value calculating unit 200, a concentration ratio calculating unit 210, a share calculating unit 220, a first reciprocal calculating unit 230, a second reciprocal calculating unit 240, an originality calculating unit 250, and a keyword extracting unit 260 in the processing device 1. Further, among the constituent elements of the first embodiment, it is not necessary to provide the keyword extracting unit 90, and the calculation result of the Skey(w) calculating unit 80 is stored as is in the processing result storage unit 320.

The evaluated value calculating unit 200 reads from the processing result storage unit 320 index terms $w_i$ of each document extracted with the index term extracting unit 20 in relation to the document group set S including a plurality of document groups $E_u$. Or, the evaluated value calculating unit 200 reads from the processing result storage unit 320 Skey(w) of index terms calculated respectively for each document group $E_u$ in the Skey(w) calculating unit 80. As required, the evaluated value calculating unit 200 may read from the processing result storage unit 320 data of each document group $E_u$ read with the document reading unit 10, and count the number of documents $N(E_u)$. Further, the $GF(E_u)$ or IDF(P) calculated during the process of extracting high-frequency terms in the high-frequency term extracting unit 30 may also be read from the processing result storage unit 320.

Then, the evaluated value calculating unit 200 respectively calculates the evaluated value $A(w_i, E_u)$ based on the appearance frequency in each document group $E_u$ of each index terms $w_i$ based on the read information. The calculated evaluated value is sent to and stored in the processing result storage unit 320, or sent directly to the concentration ratio calculating unit 210 and the share calculating unit 220 and used for processing.

The concentration ratio calculating unit 210 reads from the processing result storage unit 320 the evaluated value $A(w_i, E_u)$ in each document group $E_u$ of each index terms $w_i$ calculated by the evaluated value calculating unit 200, or directly receives the same from the evaluated value calculating unit 200.

Then, the concentration ratio calculating unit 210 calculates the concentration ratio of distribution of each index term $w_i$ in the document group set S for each index term $w_i$ based on the obtained evaluated value $A(w_i, E_u)$. The concentration ratio is obtained by calculating the sum of the evaluated values $A(w_i, E_u)$ of the respective index terms $w_i$ in each document group $E_u$ for all document groups $E_u$ belonging to the document group set S, calculating the evaluated value $A(w_i, E_u)$ ratio in each document group $E_u$ in relation to the sum for each document group $E_u$, respectively calculating the squares of the ratio, and calculating the sum of all squares of the ratio for all document groups $E_u$ belonging to the document group set S. The calculated concentration ratio is sent to and stored in the processing result storage unit 320.

The share calculating unit 220 reads from the processing result storage unit 320 the evaluated value $A(w_i, E_u)$ in each document group $E_u$ of each index terms $w_i$ calculated by the evaluated value calculating unit 200, or directly receives the same from the evaluated value calculating unit 200.

Then, the share calculating unit 220 calculates the share of each index terms $w_i$ in each document group $E_u$ based on the obtained evaluated value $A(w_i, E_u)$. This share is obtained by calculating the sum of the evaluated values $A(w_i, E_u)$ of each index term $w_i$ in the analytical target document group $E_u$ for all index terms $w_i$ extracted from each document group $E_u$ belonging to the document group set S, and calculating the evaluated value $A(w_i, E_u)$ ratio of each index term $w_i$ in relation to the sum for each index term $w_i$. The calculated concentration ratio is sent to and stored in the processing result storage unit 320.

The first reciprocal calculating unit 230 reads from the processing result storage unit 320 index terms $w_i$ of each document extracted in the index term extracting unit 20 for the document group set S including a plurality of document groups $E_u$.

Then, the first reciprocal calculating unit 230 calculates a function value (for instance, the standardized IDF(S) described later) of a reciprocal of the appearance frequency of each index terms $w_i$ in the document group set S based on the data of the read index terms $w_i$ of each document of the document group set S. The calculated function value of the reciprocal of the appearance frequency in the document group set S is sent to and stored in the processing result storage unit 320, or directly sent to the originality calculating unit 250 and used for processing.

The second reciprocal calculating unit 240 calculates a function value of a reciprocal of the appearance frequency in a large document aggregation including the document group set S. All documents P are used as the large document aggregation. Here, the IDF(P) calculated during the processing extracting high-frequency terms in the high-frequency term extracting unit 30 is read from the processing result storage unit 320 in order to calculate the function value thereof (for instance, the standardized IDF(P) described later). The calculated function value of the reciprocal of the appearance frequency in the large document aggregation P is sent to and stored in the processing result storage unit 320, or directly sent to the originality calculating unit 250 and used for processing.

The originality calculating unit 250 reads from the processing result storage unit 320 each of the function values of the reciprocal of the appearance frequency calculated in the first reciprocal calculating unit 230 and the second reciprocal calculating unit 240, or directly receives the same from the first reciprocal calculating unit 230 and the second reciprocal calculating unit 240. Further, the GF(E) calculated during the processing of extracting high-frequency terms in the high-frequency term extracting unit 30 is read from the processing result storage unit 320.

Then, the originality calculating unit 250 calculates the function value obtained by subtracting the calculation result of the second reciprocal calculating unit 240 from the calculation result of the first reciprocal calculating unit 230 as originality. This function value may also be obtained by subtracting the calculation result of the second reciprocal calculating unit 240 from the calculation result of the first reciprocal calculating unit 230, and dividing the result with the sum of the calculation result of the first reciprocal calculating unit 230 and the calculation result of the second reciprocal calculating unit 240, or by multiplying the $GF(E_u)$ in each document group $E_u$. The calculated originality is sent to and stored in the processing result storage unit 320.

The keyword extracting unit 260 reads from the processing result storage unit 320 the respective data of Skey (w) calculated by the Skey(w) calculating unit 80, a concentration ratio calculated by the concentration ratio calculating unit 210, a share calculated by the share calculating unit 220, and originality calculated by the originality calculating unit 250.

Then, the keyword extracting unit 260 extracts keywords based on two or more indexes selected from the four indexes of Skey(w), the concentration ratio, the share, and the originality read as described above. As the extraction method of keywords, for instance, the keywords may be categorized by determining whether the total value of the selected plurality of indexes is greater than or less than a prescribed threshold value or within a prescribed ranking, or based on the combination of the selected plurality of indexes.

Data of the extracted keywords is sent to and stored in the processing result storage unit 320 of the recording device 3, and output to the output device 4 as necessary.

<8. Operation of Third Embodiment>

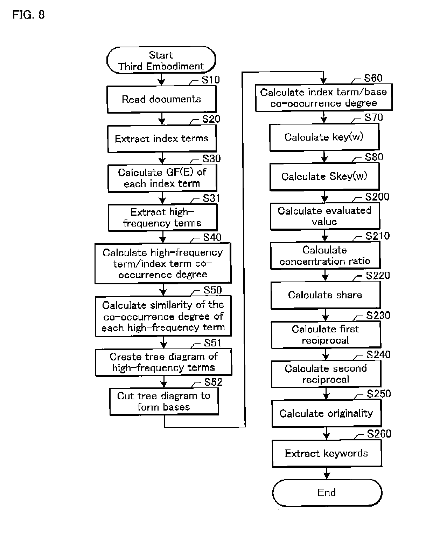

Fig. 8 is a flowchart showing the operational routine of the processing device 1 in the keyword extraction device of the third embodiment. The keyword extraction device according to the third embodiment extracts keywords from each analytical target document group $E_u$ using data of the document group set S including a plurality of document groups $E_u$ (u = 1, 2, ..., n;

wherein n is the number of document groups). The plurality of document groups $E_u$, for instance, are the individual clusters obtained by clustering a certain document group set S.

Foremost, with the same process as the first embodiment described above, processing from step S10 to step S80 is executed for each document group $E_u$ belonging to the document group set S to calculate the Skey(w) of each index term in each document group $E_u$. The processing up to calculating the Skey(w) is the same as the case illustrated in Fig- 3, and the explanation thereof is omitted.

<8-1. Calculation of Evaluated Value>

After calculating the Skey(w), the keyword extraction device of the third embodiment calculates, in the evaluated value calculating unit 200, the evaluated value $A(w_i, E_u)$ of the function value of the appearance frequency of the index terms $w_i$ in each document group $E_u$ for each document group $E_u$ and each index term $w_i$ (step S200).

As the evaluated value $A(w_i, E_u)$, for instance, the foregoing Skey(w) may be used as is, or Skey(w) / $N(E_u)$, or GF(E) * IDF(P) is used. For example, the following data is obtained for each document group $E_u$ and each index term $w_i$. Incidentally, for the sake of convenience in explanation, the index term genus W = 5, and the number of document groups n = 3.

[Table 7]

| DOCUMENT GROUP $E_u$ | EVALUATED VALUE $A(w_i, E_u)$ OF INDEX TERM $w_i$ | | | | |
|---|---|---|---|---|---|
| | $W_1$ | $W_2$ | $W_3$ | $W_4$ | $W_5$ |
| $E_1$ | 4 | 2 | 10 | 0 | 4 |
| $E_2$ | 12 | 2 | 3 | 0 | 8 |
| $E_3$ | 4 | 4 | 5 | 2 | 0 |

<8-2. Calculation of Concentration Ratio>

Subsequently, the concentration ratio calculating unit 210 calculates the concentration ratio for each index term $w_i$ as follows (step S210) .

Foremost, the sum $\Sigma_{u=1}^{n} A(w_i, E_u)$ of the evaluated values $A(w_i, E_u)$ for each index term $w_i$ in each document group $E_u$ for all document groups $E_u$ belonging to the document group set S is calculated, and the ratio

$$A(w_i, E_u) \;/\; \Sigma_{u=1}^{n} A(w_i, E_u)$$

of the evaluated value $A(w_i, E_u)$ in each document group $E_u$ in relation to the sum is calculated for each document group $E_u$ and each index term $w_i$. Then, the square sum

$$\Sigma_{u=1}^{n} \{ A(w_i, E_u) \;/\; \Sigma_{u=1}^{n} A(w_i, E_u) \}^2$$

 of such ratio in all document groups $E_u$ belonging to the document group set S for each index term $w_i$ will become the concentration ratio of the index terms $w_i$ in the document group set S. The example illustrated in the foregoing table can be laid out as below, and the concentration ratio of each index term $w_i$ is calculated thereby.

[Table 8]

| | | RATIO OF EVALUATED VALUE OF INDEX TERM $w_i$ TO THE SUM : $A(w_i, E_u)/\Sigma_{u=1}^{3} A(w_i, E_u)$ | | | | |
|---|---|---|---|---|---|---|
| | | $W_1$ | $W_2$ | $W_3$ | $W_4$ | $W_5$ |
| DOCUMENT GROUP $E_u$ | $E_1$ | 4/20 | 2/8 | 10/18 | 0/2 | 4/12 |
| | $E_2$ | 12/20 | 2/8 | 3/18 | 0/2 | 8/12 |
| | $E_3$ | 4/20 | 4/8 | 5/18 | 2/2 | 0/12 |
| CONCENTRATION RATIO | | (16+144 +16)/ 400 =0.44 | (4+4 +16)/64 =0.38 | (100+9+ 25)/ 324 =0.41 | (0+0 +4)/4 =1.00 | (16+64 +0)/ 144 =0.56 |

<8-3. Calculation of Share>

Subsequently, the share calculating unit 220 calculates the share of each index term $w_i$ in each document group $E_u$ as follows (step 5220).

Foremost, the sum $\Sigma_{i=1}^{w} A(w_i, E_u)$ of the evaluated value $A(w_i, E_u)$ of each index term $w_i$ in each document group $E_u$ for all index terms $w_i$ extracted from the document group set S is calculated. Then, the share

$$A(w_i, E_u) \;/\; \Sigma_{i=1}^{w} A(w_i, E_u)$$

as the ratio of the evaluated value $A(w_i, E_u)$ of each index term $w_i$ in relation to the sum is calculated. The example illustrated in the foregoing table can be laid out as below, and the share of each index term $w_i$ in each document group $E_u$ is determined thereby.

[Table 9]

| | | SHARE $A(w_i, E_u)/\Sigma_{i=1}^{5} A(w_i, E_u)$ OF INDEX TERM $w_i$ | | | | |
|---|---|---|---|---|---|---|
| | | $w_1$ | $w_2$ | $w_3$ | $w_4$ | $w_5$ |
| DOCUMENT GROUP $E_u$ | $E_1$ | 4/20 | 2/20 | 10/20 | 0/20 | 4/20 |
| | $E_2$ | 12/25 | 2/25 | 3/25 | 0/25 | 8/25 |
| | $E_3$ | 4/15 | 4/15 | 5/15 | 2/15 | 0/15 |

<8-4. Calculation of Originality>

Subsequently, the originality value of each index term $w_i$ is calculated as follows.

Foremost, the first reciprocal calculating unit 230 calculates a function value of a reciprocal of the appearance frequency of each index term $w_i$ in the document group set S (step S230).

As the appearance frequency in the document group set S, for instance, the document frequency DF(S) is used. As the function value of the reciprocal of the appearance frequency, the inverse document frequency IDF(S) in the document group set S, or, as a more preferably example, a value obtained by standardizing the IDF(S) with all index terms extracted from the analytical target document group $E_u$ (standardized IDF(S)) is used. Here, the IDF(S) is a logarithm of "reciprocal of DF(S) x d documents N(S) of document group set S". As an example of standardization, a deviation value is used. The reason for performing standardization is to simplify the calculation of originality based on the combination with the IDF(P) described later by arranging the distribution.

Subsequently, the second reciprocal calculating unit 240 calculates a function value of a reciprocal of the appearance frequency of each index term $w_i$ in a large document aggregation P including the document group set S (step S240).

As the function value of the reciprocal of the appearance frequency, the IDF(P), or, as a more preferable example, a value obtained by standardizing the IDF(P) with all index terms extracted from the analytical target document group $E_u$ (standardized IDF(P)) is used. As an example of standardization, a deviation value is used. The reason for performing standardization is to simplify the calculation of originality based on the combination with the IDF(S) described above by arranging the distribution.

Subsequently, the originality calculating unit 250 calculates the function value of {function value of IDF(S) - function value of IDF(P)} for each index term $w_i$ as originality (step S250). When using only the IDF(S) and IDF(P) in calculating the originality, one value will be calculated as the originality for each index term $w_i$. When using the standardized IDF(S) or standardized IDF(P) obtained by standardizing the document group $E_u$, or when separately performing weighting with the GF ($E_u$) or the like, the originality will be calculated respectively for each document group $E_u$ and for each index term $w_i$.

In particular, it is preferable to provide originality with the following DEV formula.

[Formula 19]

$$DEV = \text{Standardized GF(Eu)} \times \frac{\text{Standardized IDF(S)} - \text{Standardized IDF(P)}}{\text{Standardized IDF(S)} + \text{Standardized IDF(P)}}$$

The standardized GF($E_u$), which is the first factor of DEV, is obtained by standardizing the global frequency GF($E_u$) of each index term $w_i$ in the analytical target document group $E_u$ with all index terms extracted from the analytical target document group $E_u$.

When the standardization is performed such that the standardized IDF(S) > 0 and the standardized IDF(P) > 0, the second factor of DEV will be positive if the standardized value of the IDF in the document group set S is greater than the standardized value of the IDF in the large document aggregation P, and be negative if the standardized value of the IDF in the document group set S is less than the standardized value of the IDF in the large document aggregation P. If the IDF in the document group set S is large, it implies that the term is a rare term in the document group set S. Among the rare terms in the document group set S, it could be said that the terms that have a small IDF in the large document aggregation P including the document group set S may be used often in other fields, but have originality when used in the field pertaining to the document group set S. Further, since this is divided by {standardized IDF(S) + standardized IDF(P)}, the second factor of DEV will be within the range of -1 or more and +1 or less, and the comparison between different document groups $E_u$ can be facilitated.

Further, since DEV is proportionate to the standardized GF($E_u$), it will become a greater number for terms with higher levels of frequency in the target document group.

In particular, when the document group set S consists of a plurality of document groups $E_u$ (u = 1, 2, ...), if an originality ranking is created for each document group $E_u$ as an analytical target document group, common index terms in the document group set S will fall in the ranking and characteristics terms in each document group $E_u$ will rise in the ranking in each document group $E_u$. Thus, this is useful for comprehending the characteristic of each document group $E_u$.

<8-5. Extraction of Keywords>

Subsequently, the keyword extracting unit 260 extracts keywords based on two or more indexes selected among the four indexes of Skey(w), the concentration ratio, the share, and the originality obtained in the foregoing steps (step 5260).

Preferably, all four indexes of Skey(w), the concentration ratio, the share, and the originality are used to extract important terms by classifying the index terms $w_i$ of the target document group $E_u$ into "unimportant terms"; and "technical terms", "main terms", "original terms", and "other important terms" among the important terms. In particular, a preferable classification method is as follows.

Foremost, the first determination uses the Skey(w). A Skey(w) descending ranking is created in each document group $E_u$, and keywords that are below a prescribed ranking are deemed "unimportant terms", and removed from the target keywords to be extracted. Since the keywords that are within a prescribed ranking are important terms in each document group $E_u$, they are deemed "important terms" and classified further based on the following determination.

The second determination uses the concentration ratio. Since terms with a low concentration ratio are terms that are dispersed throughout the document group set, they can be positioned as terms that broadly capture the technical field to which the analytical target document group belongs. Thus; a concentration ratio ascending ranking is created in the document group set S, and terms that are within a prescribed ranking are deemed "technical terms". Keywords that coincide with the foregoing technical terms are classified from the important terms of each document group $E_u$ as "technical terms" of such document group $E_u$.

The third determination uses the share. Since terms with a high share have a higher share in the analytical target document group in comparison to the other terms, they can be positioned as terms (main terms) that well explain the analytical target document group. Thus, a share descending ranking is created in relation to the important terms that were not classified in the second determination in each document group $E_u$, and terms within a prescribed ranking are deemed "main terms".

The fourth determination uses the originality. An originality descending ranking is created for important terms that were not classified in the third determination in each document group $E_u$, and terms within a prescribed ranking are deemed "original terms". The remaining important terms are deemed "other important terms".

The foregoing determinations laid out in a table will be as follows.

[Table 10]

| CATEGORY/ ATTRIBUTE | Skey(W) | CONCENTRATION RATIO | EXPLANATION INDEX | ORIGINALITY |
|---|---|---|---|---|
| UNIMPORTANT TERMS | LOW | | | |
| TECHNICAL TERMS | HIGH | LOW | | |
| MAIN TERMS | | HIGH | HIGH | |
| ORIGINAL TERMS | | | LOW | HIGH |
| OTHER IMPORTANT TERMS | | | | LOW |

Although Skey(w) was used as the importance index in the first determination above, the invention is not limited thereto, and another index showing the importance in a document group may also be used. For instance, GF(E) * IDF(P) may be used.

Further, although the classification was conducted using the four indexes of the importance, the concentration ratio, the share, and the originality, the index terms may be classified by using two or more arbitrary indexes among such four indexes.

**Claims**

1.  A keyword extraction device for extracting keywords from a document group including a plurality of documents, the device comprising:

    index term extraction means for extracting index terms from data of the document group;
    high-frequency term extraction means for calculating a weight including evaluation on the level of an appearance frequency of each index term in the document group and extracting high-frequency terms which are the index terms having a great weight;
    high-frequency term/index term co-occurrence degree calculating means for calculating a co-occurrence degree of each high-frequency term and each index term in the document group on the basis of the presence or absence of the co-occurrence of the corresponding high-frequency term and the corresponding index term in each document;

clustering means for creating clusters by classifying the high-frequency terms on the basis of the calculated co-occurrence degree;

score calculating means for calculating a score of each index term such that a high score is given to the index term among the index terms that co-occurs with the high-frequency term belonging to more clusters and that co-occurs with the high-frequency term in more documents; and

keyword extraction means for extracting keywords on the basis of the calculated scores.

2. The keyword extraction device according to claim 1, wherein the score of each index term calculated by said score calculating means is such a score that a high score is given to the index term with a low appearance frequency in a document set including documents other than those included in the document group.

3. The keyword extraction device according to claim 1 or 2, wherein the score of each index term calculated by said score calculating means is such a score that a high score is given to the index term with a high appearance frequency in the document group.

4. The keyword extraction device according to any one of claims 1 to 3, wherein said keyword extraction means decides the number of keywords to be extracted on the basis of the appearance frequencies of the index terms, which a high score is given to by said score calculating means, in the document group.

5. The keyword extraction device according to claim 4, wherein said keyword extraction means extracts the decided number of keywords on the basis of appearance ratios of terms in titles of the documents belonging to the document group.

6. The keyword extraction device according to any one of claims 1 to 3, further comprising:

evaluated value calculating means for calculating an evaluated value of each index term in each document group of a document group set including the document group as an analytical target and another document group; and

concentration ratio calculating means for calculating a concentration ratio in distribution of each index term in the document group set, the concentration ratio being obtained by calculating the sum of the evaluated values of the index terms every document group belonging to the document group set, calculating ratios of the evaluated values to the sum every document group, calculating squares of the ratios, and calculating the sum of all the squares of the ratios every document group belonging to the document group set,

wherein said keyword extraction means extracts the keywords by adding the evaluation of the concentration ratios calculated by said concentration ratio calculating means to the scores in the document group as an analytical target calculated by said score calculating means.

7. The keyword extraction device according to any one of claims 1 to 3, further comprising:

evaluated value calculating means for calculating an evaluated value of each index term in each document group of a document group set including the document group as an analytical target and another document group; and

share calculating means for calculating a share of each index term in the document group as an analytical target, the share being obtained by calculating the sum of the evaluated values of all the index terms, which are extracted from each document group belonging to the document group set, in the document group as an analytical target and calculating a ratio of the evaluated value to the sum every index term,

wherein said keyword extraction means extracts the keywords by adding the evaluation of the shares in the document group as an analytical target calculated by said share calculating means to the scores in the document group as an analytical target calculated by said score calculating means.

8. The keyword extraction device according to any one of claims 1 to 3, further comprising:

first reciprocal calculating means for calculating a function value of a reciprocal of the appearance frequency of each index term in a document group set including the document group as an analytical target and another document group;

second reciprocal calculating means for calculating a function value of a reciprocal of the appearance frequency of each index term in a large document aggregation including the document group set; and

originality calculating means for calculating originality of each index term in the document group set on the basis of the function value obtained by subtracting the calculation result of said second reciprocal calculating means from the calculation result of said first reciprocal calculating means,
wherein said keyword extraction means extracts the keywords by adding the evaluation of the originality calculated by said originality calculating means to the scores in the document group as an analytical target calculated by said score calculating means.

**9.** A keyword extraction device for extracting keywords from a document group including a plurality of documents, the device comprising:

index term extraction means for extracting index terms from data of a document group set including the document group as an analytical target and another document group;
evaluated value calculating means for calculating an evaluated value of each index term in each document group of the document group set;
concentration ratio calculating means for calculating a concentration ratio in distribution of each index term in the document group set, the concentration ratio being obtained by calculating the sum of the evaluated values of the index terms every document group belonging to the document group set, calculating ratios of the evaluated values to the sum every document group, calculating squares of the ratios, and calculating the sum of all the squares of the ratios every document group belonging to the document group set;
share calculating means for calculating a share of each index term in the document group as an analytical target, the share being obtained by calculating the sum of the evaluated values of the index terms, which are extracted from each document group belonging to the document group set, in the document group as an analytical target, and calculating a ratio of the evaluated value to the sum every index term; and
keyword extraction means for extracting the keywords on the basis of a combination of the concentration ratios calculated by said concentration ratio calculating means and the shares in the document group as an analytical target calculated by said share calculating means.

**10.** The keyword extraction device according to claim 9, further comprising:

first reciprocal calculating means for calculating a function value of a reciprocal of the appearance frequency of each index term in the document group set;
second reciprocal calculating means for calculating a function value of a reciprocal of the appearance frequency of each index term in a large document aggregation including the document group set; and
originality calculating means for calculating originality on the basis of the function value obtained by subtracting the calculation result of said second reciprocal calculating means from the calculation result of said first reciprocal calculating means,
wherein said keyword extraction means extracts the keywords on the basis of the combination further including the originality calculated by said originality calculating means.

**11.** A keyword extraction device for extracting keywords from a document group including a plurality of documents, the device comprising:

index term extraction means for extracting index terms from data of a document group set including the document group as an analytical target and another document group; and
two or more means of:

(a) appearance frequency calculating means for calculating a function value of an appearance frequency of each index term in the document group as an analytical target;
(b) concentration ratio calculating means for calculating a concentration ratio in distribution of each index term in the document group set, the concentration ratio being obtained by calculating an evaluated value of each index term in each document group, calculating the sum of the evaluated values of the index terms every document group belonging to the document group set, calculating ratios of the evaluated values to the sum every document group, calculating squares of the ratios, and calculating the sum of all the squares of the ratios every document group belonging to the document group set;
(c) share calculating means for calculating a share of each index term in the document group as an analytical target, the share being obtained by calculating an evaluated value of each index term in each document group, calculating the sum of the evaluated values of the index terms, which are extracted from each document group belonging to the document group set, in the document group as an analytical target, and calculating a ratio of the evaluated value to the sum every index term;

(d) originality calculating means for calculating originality of each index term on the basis of a function value obtained by subtracting a function value of a reciprocal of the appearance frequency of each index term in a large document aggregation including the document group set from a function value of a reciprocal of the appearance frequency of the corresponding index term in the document group set; and

keyword extraction means for categorizing and extracting the keywords on the basis of a combination of two or more of the function values of the appearance frequencies in the document group as an analytical target, the concentration ratios, the shares in the document group as an analytical target, and the originality, which are calculated by said two or more means.

**12.** The keyword extraction device according to claim 11, wherein said keyword extraction means categorizes and extracts the keywords by:

determining the index terms having the function values of the appearance frequencies in the document group as an analytical target that are greater than a prescribed threshold value as being important terms in the document group as an analytical target;

determining the index terms, among the important terms in the document group as an analytical target, having the concentration ratios that are less than a prescribed threshold value as being technical terms in the document group as an analytical target;

determining the index terms, among the important terms other than the technical terms in the document group as an analytical target, having the shares in the document group as an analytical target that are greater than a prescribed threshold value as being main terms in the document group as an analytical target; and

determining the index terms, among the important terms other than the technical terms and the main terms in the document group as an analytical target, having the originality that is greater than a prescribed threshold value as being original terms in the document group as an analytical target.

**13.** The keyword extraction device according to any one of claims 8, 10, 11, and 12, wherein the function values of the reciprocals of the appearance frequencies in the document group set are a result of standardizing inverse document frequencies (IDF) of all the index terms in the document group as an analytical target, in the document group set, and wherein the function values of the reciprocals of the appearance frequencies in a large document aggregation including the document group set are a result of standardizing the inverse document frequencies (IDF) of all the index terms in the document group as an analytical target, in the large document aggregation.

**14.** A keyword extraction method of extracting keywords from a document group including a plurality of documents, the method comprising:

an index term extraction step of extracting index terms from data of the document group;

a high-frequency term extraction step of calculating a weight including evaluation on the level of an appearance frequency of each index term in the document group and extracting high-frequency terms which are the index terms having a great weight;

a high-frequency term/index term co-occurrence degree calculating step of calculating a co-occurrence degree of each high-frequency term and each index term in the document group on the basis of the presence or absence of the co-occurrence of the corresponding high-frequency term and the corresponding index term in each document;

a clustering step of creating clusters by classifying the high-frequency terms on the basis of the calculated co-occurrence degree;

a score calculating step of calculating a score of each index term such that a high score is given to the index term among the index terms that co-occurs with the high-frequency term belonging to more clusters and co-occurs with the high-frequency term in more documents; and

a keyword extraction step of extracting the keywords on the basis of the calculated scores.

**15.** A keyword extraction method of extracting keywords from a document group including a plurality of documents, the method comprising:

an index term extraction step of extracting index terms from data of a document group set including the document group as an analytical target and another document group;

an evaluated value calculating step of calculating an evaluated value of each index term in each document group of the document group set;

a concentration ratio calculating step of calculating a concentration ratio in distribution of each index term in the document group set, the concentration ratio being obtained by calculating the sum of the evaluated values of the index terms every document group belonging to the document group set, calculating ratios of the evaluated values to the sum every document group, calculating squares of the ratios, and calculating the sum of all the squares of the ratios for all the document groups belonging to the document group set;

a share calculating step of calculating a share of each index term in the document group as an analytical target, the share being obtained by calculating the sum of the evaluated values of the index terms, which are extracted from each document group belonging to the document group set, in the document group as an analytical target and calculating a ratio of the evaluated value to the sum every index term; and

a keyword extraction step of extracting the keywords on the basis of a combination of the concentration ratios calculated in said concentration ratio calculating step and the shares in the document group as an analytical target calculated in said share calculating step.

16. A keyword extraction method of extracting keywords from a document group including a plurality of documents, the method comprising:

an index term extraction step of extracting index terms from data of a document group set including the document group as an analytical target and another document group; and

two or more steps of:

(a) an appearance frequency calculating step of calculating a function value of an appearance frequency of each index term in the document group as an analytical target;

(b) a concentration ratio calculating step of calculating a concentration ratio in distribution of each index term in the document group set, the concentration ratio being obtained by calculating an evaluated value of each index term in each document group, calculating the sum of the evaluated values of the index terms every document group belonging to the document group set, calculating ratios of the evaluated values to the sum every document group, calculating squares of the ratios, and calculating the sum of all the squares of the ratios in all the document groups belonging to the document group set;

(c) a share calculating step of calculating a share of each index term in the document group as an analytical target, the share being obtained by calculating the evaluated value of each index term in each document group, calculating the sum of the evaluated values of the index terms, which are extracted from each document group belonging to the document group set, in the document group as an analytical target, and calculating a ratio of the evaluated value to the sum every index term; and

(d) an originality calculating step of calculating originality of each index term on the basis of a function value obtained by subtracting a function value of a reciprocal of the appearance frequency of each index term in a large document aggregation including the document group set from a function value of a reciprocal of the appearance frequency of the corresponding index term in the document group set; and

a keyword extraction step of categorizing and extracting the keywords on the basis of a combination of two or more of the function values of the appearance frequencies in the document group as an analytical target, the concentration ratios, the shares in the document group as an analytical target, and the originality calculated in said two or more steps.

17. A keyword extraction program for extracting keywords from a document group including a plurality of documents, the program causing a computer to execute:

an index term extraction step of extracting index terms from data of the document group;

a high-frequency term extraction step of calculating a weight including evaluation on the level of an appearance frequency of each index term in the document group and extracting high-frequency terms which are the index terms having a great weight;

a high-frequency term/index term co-occurrence degree calculating step of calculating a co-occurrence degree of each high-frequency term and each index term in the document group on the basis of the presence or absence of the co-occurrence of the corresponding high-frequency term and the corresponding index term in each document;

a clustering step of creating clusters by classifying the high-frequency terms on the basis of the calculated co-occurrence degrees;

a score calculating step of calculating a score of each index term such that a high score is given to the index term among the index terms that co-occurs with the high-frequency term belonging to more clusters and that co-occurs with the high-frequency term in more documents; and

a keyword extraction step of extracting the keywords on the basis of the calculated scores.

**18.** A keyword extraction program for extracting keywords from a document group including a plurality of documents, the program causing a computer to execute:

an index term extraction step of extracting index terms from data of a document group set including the document group as an analytical target and another document group;

an evaluated value calculating step of calculating an evaluated value of each index term in each document group of the document group set;

a concentration ratio calculating step of calculating a concentration ratio in distribution of each index term in the document group set, the concentration ratio being obtained by calculating the sum of the evaluated values of the index terms every document group belonging to the document group set, calculating ratios of the evaluated values to the sum every document group, calculating squares of the ratios, and calculating the sum of all the squares of the ratios for all the document groups belonging to the document group set;

a share calculating step of calculating a share of each index term in the document group as an analytical target, the share being obtained by calculating the sum of the evaluated values of the index terms, which are extracted from each document group belonging to the document group set, in the document group as an analytical target and calculating a ratio of the evaluated value to the sum every index term; and

a keyword extraction step of extracting the keywords on the basis of a combination of the concentration ratios calculated in said concentration ratio calculating step and the shares in the document group as an analytical target calculated in said share calculating step.

**19.** A keyword extraction program for extracting keywords from a document group including a plurality of documents, the program causing a computer to execute:

an index term extraction step of extracting index terms from data of a document group set including the document group as an analytical target and another document group; and

two or more steps of:

(a) an appearance frequency calculating step of calculating a function value of an appearance frequency of each index term in the document group as an analytical target;

(b) a concentration ratio calculating step of calculating a concentration ratio in distribution of each index term in the document group set, the concentration ratio being obtained by calculating an evaluated value of each index term in each document group, calculating the sum of the evaluated values of the index terms every document group belonging to the document group set, calculating ratios of the evaluated values to the sum every document group, calculating squares of the ratios, and calculating the sum of all the squares of the ratios in all the document groups belonging to the document group set;

(c) a share calculating step of calculating a share of each index term in the document group as an analytical target, the share being obtained by calculating the evaluated values of the index terms in each document group, calculating the sum of the evaluated values of the index terms, which are extracted from each document group belonging to the document group set, in the document group as an analytical target, and calculating a ratio of the evaluated value to the sum every index term; and

(d) an originality calculating step of calculating originality of each index term on the basis of a function value obtained by subtracting a function value of a reciprocal of the appearance frequency of each index term in a large document aggregation including the document group set from a function value of a reciprocal of the appearance frequency of the corresponding index term in the document group set; and

a keyword extraction step of categorizing and extracting the keywords on the basis of a combination of two or more of the function values of the appearance frequencies in the document group as an analytical target, the concentration ratios, the shares in the document group as an analytical target, and the originality calculated in said two or more steps.

FIG. 1

```
                        ┌─ 2
┌─────────────────────┐
│     INPUT DEVICE     │
└─────────────────────┘
           │
           ▼            ┌─ 1                              ┌─ 3
┌─────────────────────┐         ┌─────────────────────────┐
│  PROCESSING DEVICE   │ ──────► │     RECORDING DEVICE     │
│                      │ ◄────── │                          │
└─────────────────────┘         └─────────────────────────┘
           │
           ▼            ┌─ 4
┌─────────────────────┐
│    OUTPUT DEVICE     │
└─────────────────────┘
```

FIG. 2

FIG. 3

FIG. 4

FIG. 5

Start
Second Embodiment

S10
Read documents

S20
Extract index terms

S30
Calculate GF(E) of
each index term

S31
Extract high-
frequency terms

S40
Calculate high-frequency
term/index term co-
occurrence degree

S50
Calculate similarity of the
co-occurrence degree of
each high-frequency term

S51
Create tree diagram of
high-frequency terms

S52
Cut tree diagram to
form bases

S60
Calculate index term/base
co-occurrence degree

S70
Calculate key(w)

S80
Calculate Skey(w)

S100
Extract titles

S110
Calculate title score

S120
Read high Skey(w)
terms

S130
Decide the number of
labels

S140
Extract labels

End

FIG. 6

FIG. 7

FIG. 8

Start
Third Embodiment

S10 — Read documents

S20 — Extract index terms

S30 — Calculate GF(E) of each index term

S31 — Extract high-frequency terms

S40 — Calculate high-frequency term/index term co-occurrence degree

S50 — Calculate similarity of the co-occurrence degree of each high-frequency term

S51 — Create tree diagram of high-frequency terms

S52 — Cut tree diagram to form bases

S60 — Calculate index term/base co-occurrence degree

S70 — Calculate key(w)

S80 — Calculate Skey(w)

S200 — Calculate evaluated value

S210 — Calculate concentration ratio

S220 — Calculate share

S230 — Calculate first reciprocal

S240 — Calculate second reciprocal

S250 — Calculate originality

S260 — Extract keywords

End

<div align="center">

**INTERNATIONAL SEARCH REPORT**

</div>

| | International application No. |
|---|---|
| | PCT/JP2005/018712 |

| A. CLASSIFICATION OF SUBJECT MATTER |
|---|
| *G06F17/30*(2006.01) |
| |
| According to International Patent Classification (IPC) or to both national classification and IPC |

| B. FIELDS SEARCHED |
|---|
| Minimum documentation searched (classification system followed by classification symbols) |
| *G06F17/30*(2006.01) |
| |
| Documentation searched other than minimum documentation to the extent that such documents are included in the fields searched |
| Jitsuyo Shinan Koho        1922-1996   Jitsuyo Shinan Toroku Koho   1996-2006<br>Kokai Jitsuyo Shinan Koho   1971-2006   Toroku Jitsuyo Shinan Koho   1994-2006 |
| Electronic data base consulted during the international search (name of data base and, where practicable, search terms used) |
| |

| C. DOCUMENTS CONSIDERED TO BE RELEVANT | | |
|---|---|---|
| Category* | Citation of document, with indication, where appropriate, of the relevant passages | Relevant to claim No. |
| A | Yukio OSAWA, Nerusu E. Benson, Masahiko TANIUCHIDA, "KeyGraph: Go no Kyoki Graph no Bunkatsu Togo ni yoru Keyword Chushutsu", The Transactions of the Institute of Electronics, Information and Communication Engineers, 25 February, 1999 (25.02.99), Vol. J82-D-I, No.2, pages 391 to 399 | 1-19 |
| A | Seiko NIWASE, Saori HAMADA, Takaharu ARAKI, Naohiro MATSUMURA, Yukio OSAWA, Katsutoshi YADA, "KeyGraph to Tokei Shuho o Mochiita Shohisha Image no Sokutei Shuho", Dai 51 Kai Jinko Chino Kisoron Kenkyukai Shiryo, 30 January, 2003 (30.01.03), pages 25 to 30 | 1-19 |

| ☒   Further documents are listed in the continuation of Box C. | ☐   See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>10 January, 2006 (10.01.06) | Date of mailing of the international search report<br>17 January, 2006 (17.01.06) |
|---|---|
| Name and mailing address of the ISA/<br>   Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2005/018712 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2000-276487 A  (Mitsubishi Electric Corp.), 06 October, 2000 (06.10.00), Full text; all drawings (Family: none) | 1-19 |

Form PCT/ISA/210 (continuation of second sheet) (April 2005)

**EP 1 830 281 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUKIO OSAWA et al.** KeyGraph: Extraction of Keywords by Division/Integration of Co-occurrence Graph of Terms. *Journal of the Institute of Electronics, Information and Communication Engineers,* February 1999, vol. J82-D-I (2), 391-400

- **YUKIO OSAWA et al.** KeyGraph : Extraction of Keywords by Division/Integration of Co-occurrence Graph of terms. *Journal of the Institute of Electronics, Information and Communication Engineers,* February 1999, vol. J82-D-I (2), 391-400